(19) Europäisches Patentamt
European Patent Office
Office européen des brevets

(11) EP 2 176 318 B1

(12) **EUROPEAN PATENT SPECIFICATION**

(45) Date of publication and mention of the grant of the patent:
**24.05.2017 Bulletin 2017/21**

(21) Application number: **08786812.1**

(22) Date of filing: **04.08.2008**

(51) Int Cl.:
***C08G 75/23*** *(2006.01)* ***C08G 65/40*** *(2006.01)*

(86) International application number:
**PCT/EP2008/060199**

(87) International publication number:
**WO 2009/019239 (12.02.2009 Gazette 2009/07)**

(54) **FLAME RESISTANT SULFONE POLYMERS**

FLAMMENHEMMENDE SULFONPOLYMERE

POLYMÈRES DE SULFONE RÉSISTANTS AUX FLAMMES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.08.2007 US 954084 P**
**21.05.2008 US 55033**
**10.07.2008 US 79529**

(43) Date of publication of application:
**21.04.2010 Bulletin 2010/16**

(73) Proprietor: **Solvay Specialty Polymers USA, LLC.**
**Alpharetta, GA 30005 (US)**

(72) Inventors:
- **SCHWAB, Thomas H.**
  **Cumming, Georgia 30040 (US)**
- **MOORE, Theodore**
  **Cumming, Georgia 30040 (US)**

(74) Representative: **Vande Gucht, Anne et al**
**Solvay S.A.**
**Département de la Propriété Industrielle**
**Rue de Ransbeek, 310**
**1120 Bruxelles (BE)**

(56) References cited:
**EP-A- 0 426 118** **EP-A- 0 426 119**
**EP-A- 0 640 653** **WO-A-2008/059004**
**US-A- 4 108 837** **US-B1- 6 248 931**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 176 318 B1

## Description

FIELD OF THE INVENTION

The invention relates to new polymers exhibiting outstanding properties. In particular, the invented polymers exhibit improved flame retardancy and/or lower thermal release on combustion, while also featuring excellent optical properties, including low color, colorability and transparency. The invention further relates to methods of manufacturing the invented polymers, compositions containing such polymers, and articles made from such polymers.

DESCRIPTION OF THE RELATED ART

Polysulfone is a generic term used to describe any polymer containing recurring units of one or more diaryl sulfone groups of general formula -Ar-$SO_2$-Ar-, where Ar is a substituted or unsubstituted aryl group such as a phenyl, biphenyl, bisphenol or any other aryl group containing an aromatic or hetero-aromatic ring.

Well known and commercially available polysulfones include the polysulfone identified herein as PSU. PSU contains reacted units of diphenyl sulfone and bisphenol A (BPA). Such PSU is available commercially from Solvay Advanced Polymers (i.e., under the trademark UDEL®). The structure of the repeating units of a UDEL polysulfone, made by condensing bisphenol A (BPA) and 4,4'-dichlorodiphenyl sulfone (DCDPS), is shown below :

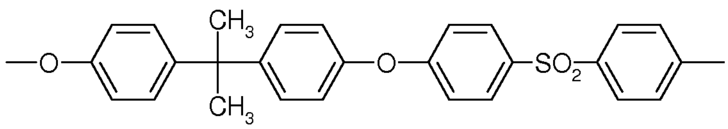

PSU has a high glass transition temperature (e.g., about 185°C) and exhibits high strength and toughness.

RADEL R® polyphenylsulfone (identified herein as PPSU) is another polysulfone available from Solvay Advanced Polymers, which is made by reacting units of 4,4'-dichlorodiphenyl sulfone (DCDPS) and 4,4'-biphenol (BP).

Other polysulfones include co-polymers having at least two different types of sulfone and/or diphenol groups. RADEL A® polyethersulfones, available from Solvay Advanced Polymers, include a polyethersulfone portion made from repeating or recurring groups of formula -Ar-$SO_2$-Ar-O- and a relatively lower amount of a polyetherethersulfone portion of formula -Ar-$SO_2$-Ar-O-Ar'-O-, where the polyethersulfone portion and the polyetherethersulfone portion are bonded to one another.

Polysulfones are typically amorphous and do not melt crystallize. One substantial advantage of polysulfones is their transparency. Due to their high strength and heat resistance, certain polysulfones may be used in high-stress environments where other transparent polymers such as polycarbonate may degrade or may otherwise be unsuitable. Polysulfones are particularly well suited for aircraft applications where lightness and strength are key properties. They are thus used in many aircraft applications including, for example, passenger service units, staircases, window reveals, window covers, ceiling and sidewall panels, wall partitions, window shades, storage bins, serving trays, seat backs, cabin partitions, and ducts. Polysulfones and compositions containing polysulfones are especially well suited for the production of transparent articles such as windows, lighting fixtures and partitions.

Further advantages of polysulfones include good chemical resistance, such that polysulfones are able to withstand exposure to the types of cleaning fluids used in the aircraft industry ; processability in the melt phase including injection molding and extrusion ; and ease of colorability.

Polysulfones undergo thermal degradation, e.g., burning or combustion, with low smoke emission and low thermal emission.

To be permitted for use inside aircraft, engineering thermoplastics, including polysulfones, must meet certain requirements for flame retardancy and heat release during combustion.

Some polysulfone materials, such as PSU, give acceptable flame retardancy properties. Of the polysulfones that are presently commercially available, polyphenylsulfone (PPSU) in particular provides excellent performance for aircraft applications where transparency is required. Still, the heat release properties of polysulfones that are currently commercially available are inferior to the heat release properties of other engineering thermoplastic compositions, especially opaque plastic materials and/or blends that contain one or more conventional flame retardants.

Conventional flame retardants such as triphenyl phosphate or melamine cyanurate are often mixed with conventional engineering thermoplastics to improve heat release properties and to reduce flammability. Such conventional flame retardants may be added to polysulfone compositions ; however, the resulting compositions often exhibit significantly impaired transparency. For example, when added to a polysulfone, such flame retardants may not be miscible with the engineering thermoplastic and consequently impart haze and/or an opaque appearance to the polysulfone. Common flame retardants, including inorganic additives such as $TiO_2$, ZnO or zinc borate, provide improved flame

retardancy only at high loading levels with a concomitant negative effect on weight, processability and optical properties.

Fluorocarbon resins such as polytetrafluoroethylene have been used to improve the flame retardancy, and thermal release properties of conventional engineering thermoplastics such as polycarbonate. Fluorocarbon resins have also been used in combination with polysulfones. For example, U.S. Patent No. 5,204,400 discloses flame retardant thermoplastic compositions comprising a poly(biphenyl ether sulfone) complying with a certain generic formula. The compositions further contain anhydrous zinc borate and a fluorocarbon polymer present in the form of finely divided solids.

U.S. Patent No. 5,916,958 discloses compositions comprising a poly(biphenylethersulfone) of formula :

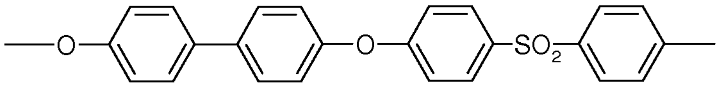

in combination with a fluorocarbon polymer and titanium dioxide. The compositions exhibited enhanced flame retardant characteristics and were described as useful for making aircraft interior parts. The fluorocarbon polymer additive is preferably a polytetrafluoroethylene (PTFE) in the form of a finely divided solid having a particle size of less than about 5 μm.

U.S. Patent No. 6,503,988 discloses flame resistive compositions containing a flammable thermoplastic resin, a flame retardant, and a polytetrafluoroethylene fine powder comprising particles of 0.05 to 1 μm as an anti-dripping agent. Polysulfone resins are mentioned as suitable flammable thermoplastic resin.

US Patent No. 6,482,880 discloses poly(biphenylethersulfone) resins having improved resistance to yellowing that include PTFE in particulate form.

While such compositions may provide, in some cases, improved flame retardancy, and/or reduced thermal release during combustion, the presence of the fluorinated polymer has a strongly negative effect on the optical and appearance properties of the resulting compositions and leads to a pearlescent and/or opaque appearance. Further, the presence of a fluorinated resin makes the resulting compositions difficult to color. The increased degree of haze and other detrimental optical affects exclude the use of such compositions from applications in which transparency is required.

Thus, there is a need for polysulfone materials and polysulfone-containing compositions that exhibit improved flame retardancy and/or lower thermal release on combustion, which concurrently have excellent optical properties, including low color, good colorability and transparency.

In order to address the above noted deficiencies of conventional polysulfones and to provide in particular polymers featuring enhanced flame retardancy in addition to the advantages offered by the commonly used polysulfones, a polysulfone copolymer, consisting of :

- first sulfone units made of bonded units of a biphenol group and a diphenylsulfone group of formula (1) :

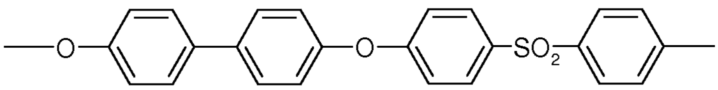

(1)

- and second sulfone units made of bonded units of a hexafluorobisphenol A group and a diphenylsulfone group of formula (2) :

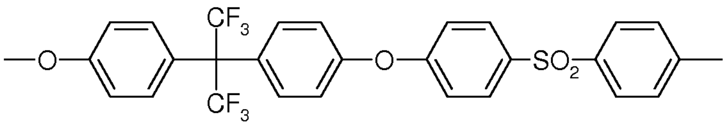

(2)

has already been proposed in PCT application filing Nb. PCT/EP2007/062358, Such copolymer has been found to be useful in aircraft applications.

SUMMARY OF THE INVENTION

The present invention addresses the same deficiencies by providing a new polymer comprising recurring units $R_A$ and recurring units $R_B$ ;
wherein the recurring units $R_A$ differ from the recurring units $R_B$ ;
wherein the recurring units $R_A$ and/or the recurring units $R_B$ comprise at least one perfluorinated moiety chosen from :

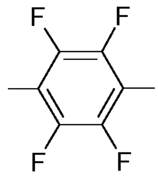

and

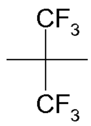

moieties ; wherein the recurring units $R_A$ and/or the recurring units $R_B$ comprise at least one $-SO_2-$ moiety ; and wherein the polymer is essentially free of acid groups and ketone groups, as defined in Claim 1.

Recurring units $R_A$ are of at least one formula selected from the group consisting of:

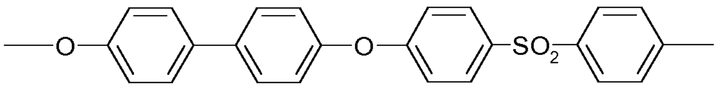

(A)

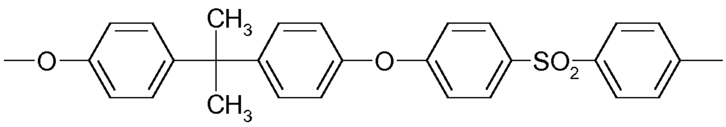

(C)

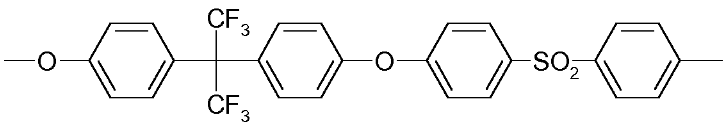

(D),

and

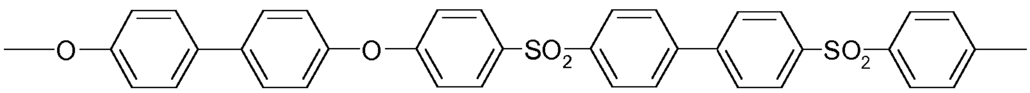

(F).

Recurring units $R_B$, while being different from recurring units $R_A$, are of at least one formula selected from the group consisting of

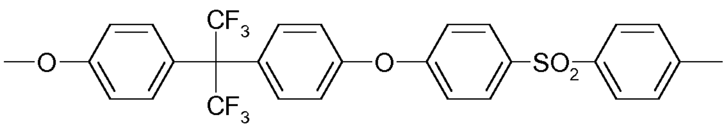

(D)

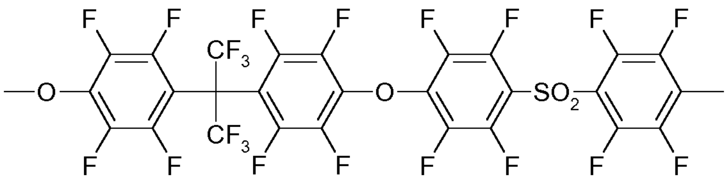

(E)

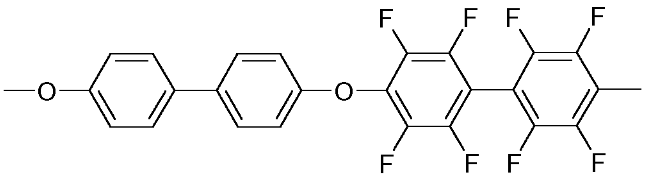

(G)

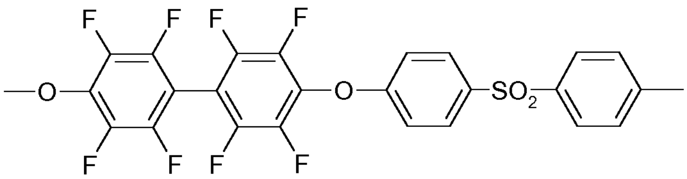

(H)

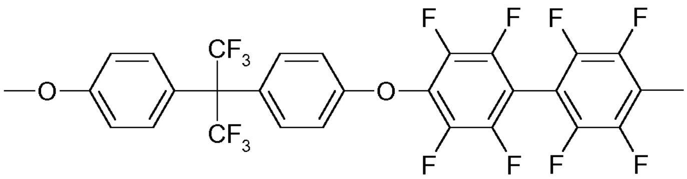

(I)

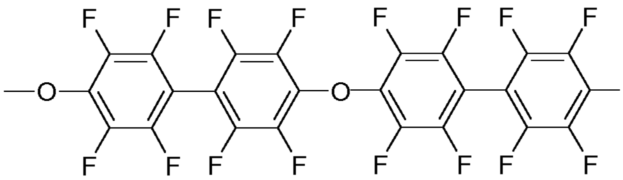

(J)

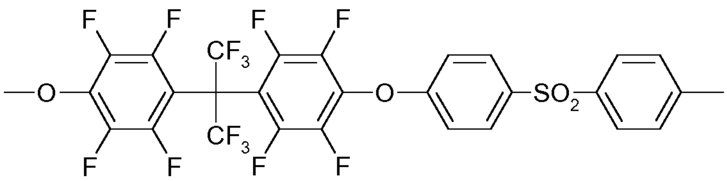

(K)

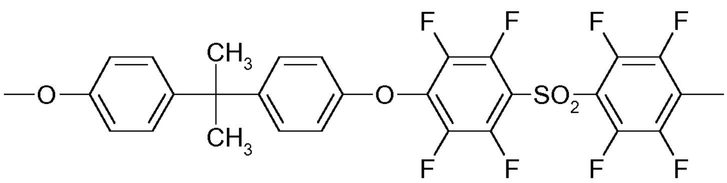

(L)

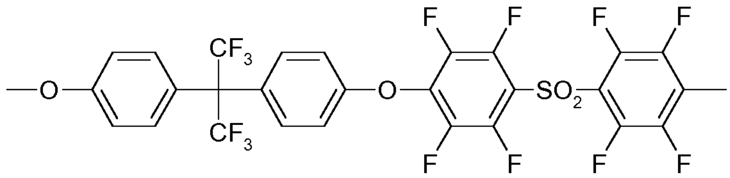

(M)

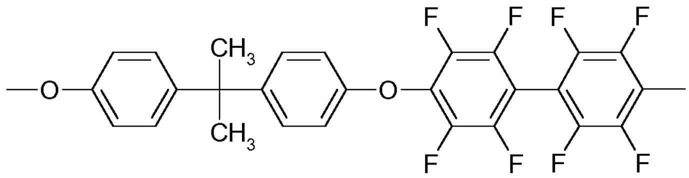

(N)

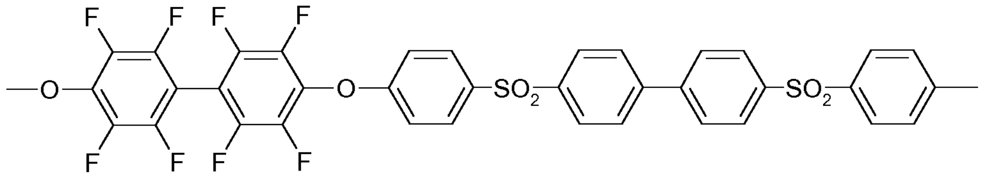

(O)

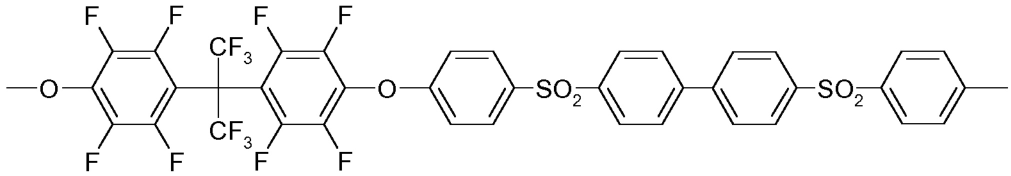

(P)

and

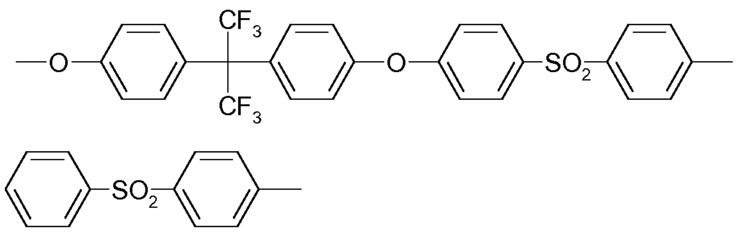

(Q).

The invented polymers feature outstanding properties and in particular improved flame retardancy and/or lower thermal release on combustion, as well as excellent optical properties, including low color, good colorability and transparency.

DETAILED DESCRIPTION OF THE PREFERRED EMBODIMENTS

Polymers are well known to the skilled person. The polymers of the present invention, as any other polymers, are typically substances composed of molecules characterized by the multiple repetition of one or more species of atoms or groups of atoms (constitutional units) linked to each other in amounts sufficient to provide a set of properties that do not vary markedly with the addition or removal of one or a few constitutional units ; such a definition of polymers has been broadly recommended, notably by the Macromolecular Division on Macromolecular Nomenclature International Union of Pure and Applied Chemistry, in "Basic Definitions of Terms relating to Polymers", Pure and Applied Chemistry 40, No. 3, pages 477-491 (1974*)* and NF T 50-100 French standard, the whole content of both documents being herein

incorporated by reference. The polymers of the present invention are not oligomers, namely, substances composed of molecules characterized by the multiple repetition of one or more species of atoms or groups of atoms (constitutional units) linked to each other, the physical properties of said oligomers varying markedly with the addition or removal of one or a few of the constitutional units from its molecules.

The weight average molecular weight of the polymers of the invention may be in any range that provides for practical processing, e.g., injection molding, extrusion, sheet forming, film forming, fibers forming etc., under melt or thermoforming conditions to provide molded, formed and/or extruded articles having desirable physical and mechanical properties as well as good optical properties. The polymers according to the present invention have a weight average molecular weight of from 25,000 to 85,000, and still more preferably from 40,000 to 70,000, as measured by gel permeation chromatography (GPC) using polystyrene calibrations standards. The nature of the solvent of the polymers to be used for making the GPC measurement is not critical, provided the solvent dissolves effectively the polymers of the invention. For example, methylene chloride can be used as solvent for the PSU/PSU-AF copolymers that are exemplified hereinafter, and also for many other fluorinated copolymers of the present invention that are synthesized from a dihalodiphenylsulfone such as difluorodiphenylsulfone, while N-methylpyrrolidone (NMP) can be used as solvent for the fluorinated copolymers synthesized from bis(chlorophenylsulfonyl)-biphenyl that are exemplified in the second series of experiments, and also for many other fluorinated copolymers synthesized from a bis(halophenylsulfonyl)-biphenyl.

Melt flow rates of the polymers of the invention are desirably low. For example, melt flow rates of from 2-40 g/10 min are preferred, more preferably from 6-35 g/10 min, more preferably from 8-30 g/10 min, still more preferably from 10-25 g/10 min. In some applications melt flow rates as low as from 14-20 g/10 min may be preferred. Melt flow rates are reported as measured under the conditions of ASTM method D 1238 at a temperature of 365°C and a load of 5 kg. Melt flow rates of greater than 20 g/10 min may also be used in specific applications such as fibers for clothing and electrical/electronic applications.

The glass transition temperature for the polymers of the invention may range from about 170 to about 275°C. Some of the invented polymers may have a glass transition temperature of from about 170 to about 200, and preferably 180-190°C, while some other invented polymers may have a glass transition temperature of from about 235 to about 275, and preferably 250-270°C.

It is preferable to have a reduced amount of hydroxyl termination because terminal hydroxyls may undergo oxidation during melt processing and thereby impart undesirable color to the polymer. Preferably, the amount of hydroxyl end groups is less than 10 $\mu$m eq/g, more preferably less than 5 $\mu$m eq/g, and still most preferably less than or equal to 2 $\mu$m eq/g.

The fluorine content of the polymers of the invention is not limited and may be as much as 50 wt. % based upon the total weight of the polymers. Preferably the fluorine is present in an amount of above 0.5 % by weight, more preferably above 5, still more preferably above 10 and the most preferably above 12 % by weight. On the other hand, the fluorine is preferably present in an amount of lower than 40 % by weight, more preferably lower than 35, still more preferably lower than 20 % by weight.

The polymers of the invention include polymers in which the recurring units have random structures (i.e. wherein the recurring units of different types, e.g. $R_A$ and $R_B$, are randomly distributed). In another embodiment, the polymers of the invention have a blocky structure, wherein the recurring units $R_A$ and recurring units $R_B$ appear in an irregular but predictable repeating or recurring manner. In still another embodiment, the polymers of the invention contain portions of random structures and portions of block structures.

The invented polymers may have a structure that is from 0 to 100 % random and from 0 to 100 % block. Preferably, the polymers have from 20 to 80 % random structure and from 80 to 20 % block structure, more preferably from 30 to 70 % random structure and from 70 to 30 % block structure, still more preferably from 40 to 60 % random structure and from 60 to 40 % block structure, the most preferably about 50 % random structure and about 50 % block structure.

A first aspect of the present invention is directed to polymers having at least two different recurring units, namely recurring units $R_A$ and recurring units $R_B$, and which are essentially free of acid groups and ketone groups, as described in Claim 1 ; preferably, they are completely free of acid groups and ketone groups.

These polymers may further contain recurring units different from recurring units $R_A$ and recurring units $R_B$. Preferably, they contain less than 40 wt. % of recurring units different from recurring units $R_A$ and recurring units $R_B$, more preferably less than 20 wt. % and still more preferably less than 10 wt. %. Still more preferably, they do not contain any recurring units other than recurring units $R_A$ and recurring units $R_B$.

Recurring units $R_A$ and recurring units $R_B$ may be present in varying ratios relative to one another. In another embodiment the number of recurring units $R_A$ moles (m) and the number of recurring units $R_B$ moles (n) are of the same order of magnitude. In said embodiment, the m/n molar ratio is advantageously of at least 0.5, preferably at least 0.67 and more preferably at least 0.91 ; besides, the m/n molar ratio is advantageously of at most 2.0, preferably at most 1.5, and more preferably at most 1.1. Excellent results were often obtained when both the recurring units $R_A$ and recurring units $R_B$ were present in about the same molar amount, i.e. when the m/n molar ratio was about 1. In still another

embodiment, the m/n molar ratio is advantageously of at least 0.05, preferably at least 0.11, and more preferably at least 0.33 ; besides, the m/n molar ratio is advantageously of at most 19, preferably at most 9, and more preferably at most 3.

Recurring units $R_A$ and/or recurring units $R_B$ comprise at least one

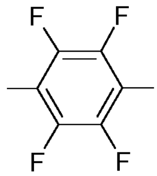

and / or

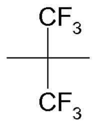

moiety.

In some particular embodiments, recurring units $R_A$ and/or recurring units $R_B$ comprise two or more of such moieties. In some other particular embodiments, recurring units $R_A$ and/or recurring units $R_B$ comprise one of each of the two above mentioned moieties.

Recurring units $R_A$ and/or recurring units $R_B$ comprise at least one $-SO_2$-moiety. In some particular embodiments, only recurring units $R_A$ or recurring units $R_B$ comprise one $-SO_2$- moiety. In some other particular embodiments, recurring units $R_A$ or recurring units $R_B$ comprise two or more $-SO_2$- moiety. Preferably, recurring units $R_A$ or recurring units $R_B$ comprise not more than two $-SO_2$- moiety.

Recurring units $R_A$ and recurring units $R_B$ may be derived from a variety of monomers. Excellent results were obtained using the monomers selected from a dihalodiphenylsulfone starting material (such as dichlorodiphenyl sulfone (DCDPS) or difluorodiphenyl sulfone (DFDPS)), hexafluorobisphenol A (also known as bisphenol AF), decafluorobiphenyl, octafluorobiphenol, bis(pentafluorophenyl)sulfone, biphenol, bisphenol A, 4,4'-bis(4-chlorophenylsulfonyl)biphenyl, etc).

Preferably, recurring units $R_A$ are of at least one formula selected from the group consisting of formulae (A), (C) and (D), or still better, of at least one formula selected from the group consisting of formulae (A) and (C). The most preferably, recurring units $R_A$ are of formula (A).

On the other hand, as also above mentioned, recurring units $R_B$, while being different from recurring units $R_A$, are preferably of at least one formula selected from the group consisting of the above described formulae (D), (E), (G), (H), (I), (J), (K), (L), (M), (N), (O), (P) and (Q). For example, recurring units $R_B$ may be of at least one formula selected from the group consisting of (D), (E), (G), (H), (I), (J), (K), (L), (M), (N) and (O) ; recurring units $R_B$ may also be of at least one formula selected from the group consisting of (P) and (Q).

In embodiments ($E_A$) of the polymers of Claim 1, recurring units $R_A$ are of the general formula (A) ; in said embodiments ($E_A$), recurring units $R_B$ are of at least one formula selected from the group consisting of the formulae (G), (H), (I), (J) and (K), and recurring units $R_B$ are more preferably of at least one formula selected from the group consisting of the formulae (G), (H), (I) and (J).

In embodiments ($E_C$) of the polymers of Claim 1, recurring units $R_A$ are of the general formula (C) ; in said embodiments ($E_C$), recurring units $R_B$ are of at least one formula selected from the group consisting of the formulae (D), (G), (H), (I), (J), (K), (L), (M) and (N), and recurring units $R_B$ are more preferably of at least one formula selected from the group consisting of the formulae (D), (G), (H), (I), (J), (K), (L) and (M).

In embodiments ($E_D$), recurring units $R_A$ are of the general formula (D) ; in said embodiments ($E_D$), recurring units $R_B$ are of at least one formula selected from the group consisting of the formulae (C), (H), (I), (J), (K), (L) and (M), and recurring units $R_B$ are more preferably of at least one formula selected from the group consisting of (H), (I), (J) and (L).

In embodiments ($E_F$) of Claim 1, recurring units $R_A$ are of the general formula (F) ; in said embodiments ($E_F$), recurring units $R_B$ are of at least one formula selected from the group consisting of the formulae (B), (D), (E), (G), (H), (I), (J), (K), (L), (M), (N), (O), (P) and (Q), and recurring units $R_B$ are more preferably of at least one formula selected from the group consisting of (D), (E), (G), (H), (I), (J), (K), (L), (N) and (O).

The polymers of the invention may be prepared by reacting separately mixtures that contain the different recurring units, i.e. recurring units $R_A$ on one hand and recurring units $R_B$ on the other hand. The mixtures containing the different recurring units may be prepared separately and purified before forming the final co-polymer.

Preferably, the mixtures containing the different recurring units are not prepared separately but instead the preparation of the co-polymer is carried out by reacting a mixture that contains all of the different monomers at the same time to form a polymer containing a distribution of the different recurring units.

The polymers of the invention may be made by reacting an alkaline earth or alkali metal salt of at least one compound having two hydroxyl groups with at least one dihalogenated compound such as 4,4'-dichlorodiphenyl sulfone (DCDPS). For example, the reaction may be carried out by reacting a metal salt of biphenol with dichlorodiphenylsulfone to thereby eliminate a metal halide which may be insoluble in the reaction medium. Precipitation of the resulting metal salt by-product from the reaction solution is one way to drive the reaction to completion. By carrying out the reaction of the alkali or alkaline earth salt of the biphenol with the dihalodiphenylsulfone in a non-protic solvent, displacement of the halogen substituents of the dihalodiphenylsulfone leads to the formation of a new C-O- bond. This reaction is preferably carried out in a non-protic solvent. Because the solubility of the resulting alkali or alkaline earth metal halide side-products is very low in such solvents, it is easy to separate the polymer from the side product of the salt elimination reaction (e.g., the metal halide salt) after the reaction is completed. Preferably the reaction is carried out in a solvent such as a sulfoxide, sulfone or N-methylpyrrolidinone solvent. The solvent may effectively dissolve both the reactants, e.g., the alkaline earth or alkali metal salts of the at least one compound having two hydroxyl groups, and the resulting polymer.

The non-protic (e.g., aprotic) solvent is preferably a substantially anhydrous dipolar aprotic solvent such as, e.g., dimethylsulfone, diphenylsulfone, dimethylacetamide, N-methylpyrrolidinone (i.e., NMP), tetrahydrothiophene-1,1-dioxide (e.g., sulfolane), tetrahydrothiophene-1-monoxide and mixtures thereof.

This reaction is usually carried out at a temperature of from 80-240°C, preferably from about 80 to about 230°C, still more preferably about 80 to about 220°C. The reaction may be carried out for a period of from 20 minutes to several hours.

Advantageously, the reaction is carried out under an inert atmosphere, such as nitrogen gas, argon gas or another gas that does not react with any of the starting materials, intermediates or products of the reaction.

The use of polar aprotic solvent provides another benefit. Any water formed during the reaction may form an azeotrope with a solvent. The water may later be removed as its azeotrope by distillation. In one embodiment of the invention, the distillation is carried out continuously during the polymerization reaction. When a further solvent such as an aromatic hydrocarbon, e.g., toluene, mono-chlorobenzene, xylene, and/or ethylbenzene, is present, a distillable azeotrope of the further solvent and water may be formed. As the reaction progresses under heating, the azeotrope may be continuously removed and thereby maintains an anhydrous condition during the reaction. Azeotropes of materials such as, e.g., toluene, xylene, ethylbenzene, and chlorobenzene, may be removed by distillation as the reaction proceeds.

In another embodiment of the inventive process for making the polymers of the invention, their synthesis may be carried out in a one-step process wherein an alkaline earth or alkali metal salt of at least one compound having two hydroxyl groups is reacted with at least one dihalogenated compound in a dipolar aprotic solvent and the resulting mixture is concurrently or subsequently polymerized without isolation of any intermediate. In a corresponding two-step process, the at least one compound having two hydroxyl groups is first converted to an alkaline earth metal salt or alkali metal salt by reaction with an alkaline metal or alkaline earth metal compound. The resulting solution of alkaline earth or alkali metal salts of the at least one compound having two hydroxyl groups is then mixed with a solution of at least one dihalogenated compound, or optionally the pure dihalogenated compound(s), incrementally or all at once.

In another embodiment of the invention, a molar excess of an alkali metal carbonate is reacted with at least one compound having two hydroxyl groups and at least one dihalogenated compound. The reaction may be carried out with, for example, a 30 mol % excess of the alkali metal carbonate, preferably 25 mol %, more preferably 20 mol %, even more preferably 10 mol % excess. The at least one compound having two hydroxyl groups reacts *in situ* with the alkali metal carbonate to form an alkali metal salt and the resulting alkali metal salt reacts with the at least one dihalogenated compound.

The use of an alkali metal carbonate having an average particle size of less than about 100 $\mu$m is particularly preferred. More preferably, an alkali metal carbonate average particle size of less than about 50 $\mu$m is used. Still more preferably, an alkali metal carbonate average particle size of less than about 30 $\mu$m is used. The use of an alkali metal carbonate having such a particle size permits the synthesis of the polymers to be carried out at a relatively lower reaction temperature with faster reaction. Similar methods are disclosed in U.S. Patent No. 6,593,445, incorporated herein by reference in its entirety. Sodium and potassium carbonate salts, singly or in combination, may be used to provide polymers having desirable molecular weight characteristics. Higher molecular weight polymers may be obtained when a potassium salt is used.

Once the reaction completed, the resulting polymer may be end-capped with one or more compounds such as a reactive aromatic halide, or an aliphatic halide. The end groups thus formed may include alkoxides or other ether groups. The end-capping with methyl chloride, i.e. sparging of methyl chloride into the reaction mixture to thereby form a terminal methoxide group on the polymer, gave good results.

The resulting polymer may be isolated by devolatilization of the reaction mixture after separation of salts with

or without first adding additional solvent such as sulfolane or a mixture of sulfolane with another solvent, optionally the azeotrope solvent, to fully dissolve any polymer and cause the precipitation of the metal halide. Alternatively, the polymer may be isolated by precipitation and/or coagulation by contacting the reaction mixture with a non-solvent for the polymer such as an alcohol or water, or mixtures thereof. The precipitate/coagulate may be rinsed and/or washed with demineralized water prior to drying under reduced pressure and elevated temperature. The resulting precipitate may be further processed by extruding and pelletizing. The pelletized product may subsequently be subjected to further melt processing such as injection molding and/or sheet extrusion. The conditions for molding, extruding, and thermoforming the resulting polysulfones are well known in the art.

The present invention concerns also polymer compositions that include at least one of the invented polymers. The invented polymer compositions may include additional ingredients such as fillers, lubricants, mould releases, antistatic agents, flame retardants, anti-fogging agents, matting agents, pigments, dyes and optical brighteners. Such additional ingredients may also be another polymeric material such as a thermoplastic material. Preferably, such additional ingredients can be finely and homogeneously dispersed in the invented polymers.

In particular, the present invention concerns polymer compositions including at least one invented fluorinated polymer as above described, and at least one two-phase siloxane-polyarylene polyether block copolymer comprising (a) at least one siloxane chain having at least two siloxane units represented by the formula :

$$R_bSiO_{\frac{4-b}{2}}$$

wherein R is (i) a monovalent hydrocarbon group (said monovalent hydrocarbon group can be unsubstituted or substituted ; when R is substituted by one or more substituents, each substituent may be notably a halogen atom, an oxygen atom of an epoxy group or a hydroxy, cyano, alkoxy, amino, amido, isocyanato, nitro, or ester group), (ii) a divalent organic group (e.g. a divalent hydrocarbon group, a hydroxy-substituted divalent hydrocarbon group or a divalent hydrocarbon group linked to a carbonyl group), or (iii) ether oxygen (-O-), and *b* has a value from 1 to 3 inclusive, said siloxane chain containing at least one of said siloxane units wherein at least one R is a divalent organic group or ether oxygen (-O-) which links the siloxane chain to a polyarylene polyether chain by a carbon to silicon bond when R is a divalent group or by an aryloxy to silicon bond when R is ether oxygen, and (b) at least one linear thermoplastic polyarylene polyether chain composed of recurring units having the formula :

-O-E-O-E'-

wherein E is the residuum of a dihydric phenol and E' is the residuum of a benzenoid compound having an inert electron withdrawing group (which has advantageously a sigma* value above + 0.7) ortho or para to the valence bonds, both of said residua being valently bonded to the ether oxygens through aromatic carbon atoms, said siloxane chain and said polyarylene polyether chain each having a molecular weight such that the copolymer is a two phase polymeric material.

Such a two-phase siloxane-polyarylene polyether block copolymer has been extensively described in GB 1 268 093 and its U.S. counterpart Pat. Nb. 3,539,657 (assigned to Union Carbide Corporation), the whole content of both patent titles being herein incorporated by reference. For the sake of clarity, these patent applications must be considered as being fully part of the present application, so that any characteristic of two-phase siloxane-polyarylene polyether block copolymer of GB 1 268 093 or US 3,539,657 may be used as a characteristic of the at least one two-phase siloxane-polyarylene polyether block copolymer included in compositions according to the present invention which contain said at least one two-phase siloxane-polyarylene polyether block copolymer in addition to the at least one invented fluorinated polymer as above described.

The two-phase siloxane-polyarylene polyether block copolymer contained in the polymer compositions in accordance with the present invention is preferably linear. Preferably, the siloxane is present in an amount of at least 10 per cent by weight and said copolymer is an elastomeric material, and, more preferably, siloxane is present in an amount of 25 at least 50 per cent by weight and each chain of the copolymer has a molecular weight in the range of 5000-20,000. The siloxane chain is preferably polydimethylsiloxane. In a particular embodiment, the siloxane chain of the two-phase siloxane-polyarylene polyether block copolymer contains olefinic unsaturation. In another embodiment (PE) to which preference is given, the polyarylene polyether chain of the two-phase siloxane-polyarylene polyether block copolymer is composed of recurring units having the formula :

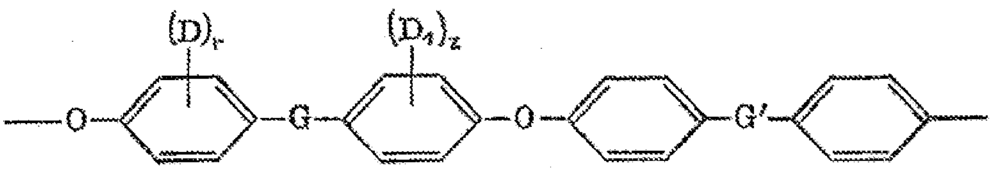

in which G represents a bond between aromatic carbon atoms or a divalent connecting radical; G' represents a sulfone, carbonyl, vinyl, sulfoxide, azo, saturated fluorocarbon, organic phosphine oxide or ethylidene group ; D and $D_1$ each represent a halogen atom or an alkyl or alkoxy group having from 1 to 4 carbon atoms ; and r (the subscript of D) and z (the subscript of $D_1$) are 0 or integers from 1 to 4 inclusive. In said embodiment (PE), the polyarylene polyether chain is preferably composed of recurring units having the formula :

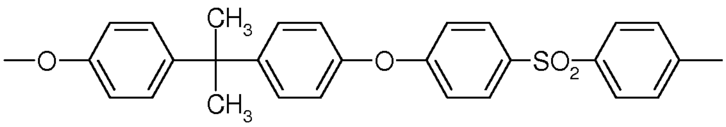

or of recurring units having the formula

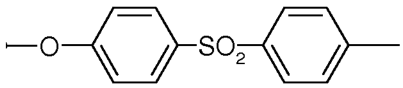

Still in said embodiment (PE), it is preferred that the siloxane be linear and the copolymer is of the $(AB)_n$ type wherein A represents said polyarylene polyether chain, B represents said siloxane chain and *n* is an integer having a value of 1 or greater, and it is very preferred that the siloxane be linear and the copolymer be of the A-B-A type wherein A represents said polyarylene polyether chain and B represents said siloxane chain. The two-phase siloxane-polyarylene polyether block copolymer as above described is preferably prepared by a process which comprises reacting an amine terminated siloxane chain and a hydroxyl terminated linear thermoplastic polyarylene polyether chain composed of recurring units having the formula

-O-E-O-E'-

wherein E is the residuum of a dihydric phenol and E' is the residuum of a benzenoid compound having an inert electron withdrawing group having a sigma* value above + 0.7 ortho or para to the valence bonds, both of said residua being valently bonded to the ether oxygens through aromatic carbon atoms, said siloxane chain and said polyarylene polyether chain each having a molecular weight such that the copolymer is a two-phase polymeric material.

Combining the fluorinated copolymers of the present invention with the two-phase siloxane-polyarylene polyether block copolymers as above described may result in a polymer composition exhibits surprisingly a further improved flame retardancy. With respect thereof, the Applicant is of the opinion that good results may be obtained notably when the polymer compositions in accordance with the present invention include, in addition to the at least one fluorinated polymer as above described, at least one polysiloxane-poly(aryl ether sulfone) copolymer, wherein :

- the poly(aryl ether sulfone) recurring units comprise at least one sulfonyl group in-between two arylene groups and at least one ether group and are preferably bisphenol A polysulfone units of formula :

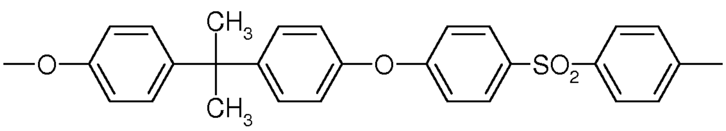

;

- the polysiloxane recurring units are preferably p-phenylene dimethylsiloxy units of formula :

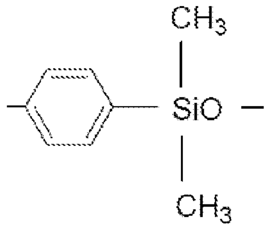

- the two-phase siloxane-polyarylene polyether block copolymer has preferably a weight average molecular weight of about 1500 to 50,000g/mol,
- the two-phase siloxane-polyarylene polyether block copolymer contains preferably from 10 to 90 wt. % of the siloxane and from 90 to 10 wt. % of the polysulfone, based on the total weight of the recurring units.

The Applicant is also of the opinion that excellent results may be obtained notably when the polymer compositions in accordance with the present invention include, in addition to the at least one fluorinated polymer as above described, at least one polysiloxane-poly(aryl ether sulfone) copolymer, wherein said two-phase siloxane-polyarylene polyether block copolymer has a weight average molecular weight of about 1,500 to 50,000g/mol, and its recurring units are of formula :

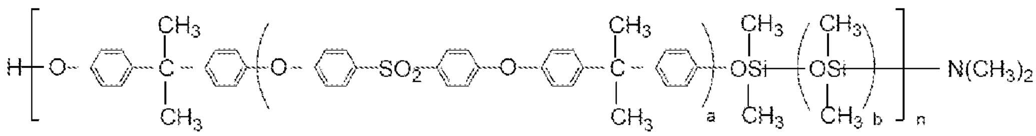

wherein subscripts a, b and n are integers > 0, and the polydimethylsiloxane and the bisphenol A polysulfone are contained in the block copolymer in a weight amount of from 10:90 to 90:10, based on the total weight of the recurring units.

The polymer compositions in accordance with the present invention may be free of any two-phase siloxane-polyarylene polyether block copolymer. Alternatively, as above explained, they may contain at least one such block copolymer. The case being, good results can be obtained notably when the amount of the two-phase siloxane-polyarylene polyether block copolymer in the polymer compositions is such that said polymer compositions have a Si content of below 10 wt. %, preferably below 5.0 wt. %, more preferably below 3.0 wt. % and still more preferably below 2.0 wt. % ; good results can also be obtained notably when the amount of the two-phase siloxane-polyarylene polyether block copolymer in the polymer compositions is such that said polymer compositions have a blend Si content of at least 0.1 %, preferably of at least 0.2 %, and more preferably above 0.5 %.

Advantageous properties of the polymers of the invention include high flame retardancy, low total heat release, and a low peak heat release. The polymers of the invention preferably have both a total heat release (THR) and peak heat release (HRR) of less than 100 kW·min/m$^2$ and kW/m$^2$, respectively, under the conditions of the OSU flammability test. More preferably the polymers of the invention have a THR and a HRR of less than 70, still more preferably less than 50, even more preferably less than 40 kW.min/m$^2$, and the most preferably no more than 30 kW·min/m$^2$ and kW/m$^2$, respectively.

The polymers and compositions of the invention exhibit advantageously rather high toughness. The notched Izod impact strength, as measured in accordance with ASTM D256, is preferably of about 1.0 or more ; it is very preferably above 1.5, and it may be as high as about 2.0 or more. The polymers and compositions of the invention exhibit advantageously good mechanical processability. The compositions are also advantageously readily melt-fabricated to produce molded articles having aesthetically pleasing surfaces, i.e. the surface of which is regular and essentially free of surface defects.

The term transparent is used herein to describe a composition and/or article that is able to transmit image-forming light. The distinctness of the image transmitted through the composition may be used as a measure of transparency. In one sense, transparency depends on the linearity of the passage of light rays through a composition or article.

Generally, when light interacts with matter, it can be reflected, absorbed, scattered, and/or transmitted. A composition or article is generally described as "transparent" if a significant fraction of incident light is transmitted through the composition or article. An object is considered "opaque" if little or substantially no light is transmitted through it. An object is considered "translucent" if some light passes through but not in a way that a coherent image can be seen through it or transmitted through it. Typically, translucence occurs when light takes a circuitous path through the composition or article, scattering due to embedded particles, defects or grain boundaries in the composition or article.

The inventive polymers and compositions may be described as transparent when (1) not reflecting significant

amounts of incoming light at the incident surface (i.e., advantageously less than 50 %, preferably less than 30 %), (2) not absorbing significant amounts of incoming light (i.e., advantageously less than 50 %, preferably less than 30 %), and (3) not scattering significant amounts of said incoming light (i.e., advantageously less than 50 %, preferably less than 30 %).

According to ASTM D 1746 (incorporated herein by reference in its entirety), transparency can be determined by small-angle scattering. A light source (1) emits a light radiation which is passed though a collimator (2) to guide incident beam towards the sample specimen (4) ; intensity of incident light beam (3) $I_i$ and of transmitted light (8) deflected of less than 0.1 degree $I_r$ is measured ; an aperture (7) avoids reflected (5) and scattered or deflected (6) light to reach the detector (9).

Transparency is thus expressed as a percentage according to the following equation :

$$\%T = \frac{I_r}{I_i} \times 100$$

The polymers and compositions of the invention have a transparency of advantageously more than 40 %, preferably of more than 50 %, more preferably more than 60 %, still more preferably of more than 65 %, even more preferably of more than 70 %, especially preferably more than 80 % according to ASTM D 1746, when measured on sheets having a thickness of 100 μm.

Generally, compositions having a transparency of less than 40 %, when measured on sheets having a thickness of 100 μm, cannot be used for aircraft applications wherein transparency is required, because of low clarity and a pearlescent opaque appearance.

The base color of any plastic is an important determinant of whether the plastic is suitable for application in transparent or certain colored applications. A colored application includes any application wherein the polymer is mixed with one or more dyes and/or pigments, in combination, optionally, with one or more additional colorless or colored components. The base color of a polymer is the color measured on the plastic before the addition of any additional component not already present in the polymer derived from a manufacturing process (e.g., added as a part of the polymerization and subsequent extrusion to form pellets and a plaque for measuring color).

The color of transparent polymers of the invention is preferably "water clear", e.g., having no detectable color. Because the invented polymers may partly degrade during melt processing, some degree of yellowing is often present in the resins. Color is often reported as a measurement of yellowness index or color factor. Color factor and yellowness index are related and may be correlated.

Yellowness index is measured by ASTM method D-1925 and is dependent upon a thickness of a sample through which a measuring beam of light is transmitted. In addition to the ASTM D 1746 method mentioned earlier for measuring transparency, light transmittance may be measured by method ASTM D-1003. Light transmittance, like yellowness index, is dependent upon the thickness of the sample through which a beam of measuring light is transmitted. Transmittance is normally measured on a plaque or chip having a thickness of 2.5 mm. The polymers according to the present invention exhibit advantageously a light transmittance greater than 50 % according to ASTM D-1003. Preferably, their light transmittance is greater than 60 %, more preferably greater than 70 %, still more preferably greater than 80 % and most preferably greater than 85 %.

Yellowness index and color factor (e.g., batch color) can also be measured on solutions obtained from the reaction of the monomer groups to form the polymers of the invention. Color factors of reactor solutions of the invented polymers diluted to 8 wt % polymer with NMP according to U.S. Patent 6,593,445, the whole content of which is herein incorporated by reference, are generally less than 70, preferably less than 60, more preferably less than 50, and most preferably less than 40.

Due to thermal degradation during melt processing, the batch color (i.e., color factor) and/or yellowness index of plaques molded from the copolymers obtained from the reaction solution are significantly higher. Generally, color factor for polymers of the invention measured on a plaque is less than 150, more preferably less than 140, 130, 120, 110, 100. Batch colors may be improved slightly by moderating the conditions under which the plaques are molded, such conditions including barrel temperature, cycle time, injection pressure and the like.

ASTM D-1003 also provides a measuring method for haze. Haze is the ratio of diffused light transmittance to the total light transmittance expressed as a percent. The haze of the polymers of the invention is of preferably less than 50 %, or preferably less than 40 %, more preferably, less than 30 %, less than 20 %, less than 15 %, less than 10 %, less than 8 %, 9 %, 7 %, 6 %, 5 % and much preferably less than 2 %.

The polymers of the invention and compositions containing such polymers provide a combination of excellent mechanical properties and excellent chemical resistance, while concurrently providing excellent optical properties (transparency, color and/or colorability) and have low thermal emission when tested under the OSU conditions. The polymers of the invention and compositions of such polymers undergo melt-fabrication at moderate conditions to provide molded

and extruded articles having smooth and aesthetically pleasing surface characteristics.

The invented polymers exhibit also a very low smoke emission when burned and in particular a very low specific optical smoke density and toxic gas generation values.

A further aspect of the present invention is thus related to articles comprising the polymer or the polymer composition as above described or the polymer manufactured by the method as above described. Such articles may be made by different technical means. They are preferably made by injection molding. The polymers of the invention are advantageously readily pigmented in a wide range of colors, and are useful in a number of applications, in particular for the construction of various panels and parts for aircraft interiors as well as electrical and electronic applications that require the use of low dielectric constants polymers. The invented polymers and compositions are specially well suited for the manufacture of articles such as an aircraft window, lighting fixture, a passenger service unit, a staircase, a window reveal, a ceiling panel, an information display, a window cover, a ceiling panel, a sidewall panel, a wall partition, a display case, a mirror, a sun visor, a window shade, a storage bin, a storage door, a ceiling overhead storage locker, a serving tray, a seat back, a cabin partition, and a duct. In addition, the invented polymers and compositions are also especially well suited for the manufacture of articles such as optical waveguides, thin-film capacitors, integrated circuit devices and other electric or electronic applications. The invented polymers and compositions may also have utility in non-stick coating applications, and flame retardant paints. They are also advantageously be shaped into fibers, for example by a solution or melt spinning process, and these fibers can be used for the manufacture of clothes, especially flame retardant clothes, and the like.

Still another aspect of the present invention is related to an essentially at most two-dimensional shaped article comprising the polymer or the polymer composition according to the present invention, as above described.

From a practical point of view, any shaped article is three-dimensional, and can thus be characterized notably by three characteristic dimensions ("length", "width" and "height"). However, some shaped articles are such that one or two of their characteristic dimensions is (are) considerably lower than respectively the other two ones or the third one. Here and wherever else used in the present description, the terms "considerably lower" should generally be understood as "more than 5 times lower" and preferably as "more than 10 times lower", unless they characterize a "two-dimensional thickness" as defined hereafter in the description.

The shaped article of the present invention includes thus essentially one-dimensional shaped articles and essentially two-dimensional shaped articles.

Precisely, for the purpose of the present invention an essentially two-dimensional shaped article is intended to denote a shaped article of which one of its characteristic dimensions ("thickness-height") is considerably lower than its other two ones ("width" and "length"), while an essentially one-dimensional shaped article is intended to denote a shaped article of which two out of its characteristic dimensions ("thickness-width" and "thickness-height") are considerably lower than its third one ("length"). Otherwise said, from a mathematic point of view, essentially two-dimensional articles have essentially the appearance of a geometric surface, while essentially one-dimensional articles have essentially the appearance of a geometric line. Thus, an essentially two-dimensional article can be viewed as a surface (with a certain length and a certain width) differing from a geometric surface in that it has a certain non-zero thickness (typically in a direction perpendicular to the surface), said non-zero thickness being however considerably lower than the square root of the surface area developed by the surface itself and, more precisely, said non-zero thickness being considerably lower than both the length and the width of the surface itself ; an essentially one-dimensional article can be viewed as a line (of a certain length) differing from a geometric line, essentially in that it has a non-zero "two-dimensional thickness" (typically in a plane perpendicular to the line, with a certain non-zero thickness-width and a certain non-zero thickness-height as characteristic dimensions), said non-zero two-dimensional thickness being however considerably lower (here specifically, the terms "considerably lower", which characterize a two-dimensional thickness, should generally be understood as "more than 25 times lower" and preferably as "more than 100 times lower") than the square of the length of the line itself, more precisely, said non-zero thickness-width and said non-zero thickness-height being both considerably lower than the length of the line itself. The geometric surface can be curved or plane, twisted or untwisted ; the geometric line can be a straight line or a curved line.

Thus, within the meaning of the present invention, an essentially at most two-dimensional shaped article can be either an essentially two-dimensional shaped article or an essentially one-dimensional shaped article.

The thickness of a shaped article of a regular or irregular volume is preferably defined as : $t = \int_V \tau(x,y,z)\, dx\, dy\, dz / V$,

wherein x, y and z are the coordinates of an elementary volume dV (dV being equal to dx times dy times dz) of the shaped article of overall plain volume V, and $\tau$ is the local thickness.

The local thickness $\tau$, associated to a material point of coordinates (x,y,z), is defined as the length of the shortest straight line D including the material point of concern, which goes right through the shaped article (i.e. which goes from the material point where D enters the shaped article to the material point where D exits the shaped article).

The shaped article of the present invention has a thickness t advantageously lower than 100 mm.

A first preferred shaped article in accordance with the present invention is essentially two-dimensional [shaped

article (A1)].

The thickness t of shaped article (A1) complies preferably with the relationship :

$$t < (V/k^2)^{1/3} \text{ [ which is equivalent to } V > (k.t) . (k.t) . t \text{ ] (rel-1)}$$

wherein V is the overall plain volume of the shaped article and k is equal to 10, t is expressed in mm and V is expressed in $mm^3$.

The thickness t of shaped article (A1) complies very preferably with above relationship (rel-1), except k is now equal to 100.

In addition, the thickness t of shaped article (A1) complies preferably with the relationship :

$$t < (S/2)^{1/2} / k \text{ [ which is equivalent to } S > 2 . (k.t) . (k.t) \text{ ] (rel-2)}$$

wherein S is the overall surface area developed by the shaped article, k is equal to 10, t is expressed in mm and S is expressed in $mm^2$.

The thickness t of shaped article (A1) complies very preferably with above relationship (rel-2), except k is now equal to 100.

In a first preferred variation of shaped article (A1), shaped article (A1) is chosen from articles having a thickness lower than 500 $\mu$m [shaped article (A1-1)]. Shaped article (A1-1) is commonly referred to as a film. The film may feature a porous structure. It can in particular be a membrane. The shaped article (A1) according to the present invention is especially well suited for its use as membrane or membrane structural element. Shaped article (A1-1) has a thickness of preferably less than 250 $\mu$m. Shaped article (A1-1) has a thickness of preferably more than 5 $\mu$m. Shaped article (A1-1) complies preferably with relationship (rel-1) in which k has been changed to 1000. Very preferably, it complies with relationship (rel-1) in which k has been changed to 10000.

Shaped article (A1-1) is preferably flexible. It is sometimes very preferred that article (A1-1) can be flexed in such a way that it can get the appearance of a parallelepiped rectangle-like volume the thickness of which is considerably lower than its length and its width ; roughly speaking, it looks then like a "plane with an extremely low thickness". Shaped article (A1-1) can be an uncoated film.

Alternatively, shaped article (A1-1) can be a film coated on an essentially two- or on a three-dimensional substrate. The essentially two- or the three-dimensional substrate can be notably a fabrics, a polymeric film free of polymer in accordance with the present invention, a sheet of paper, a wood or a metal component.

An embodiment of article (A1-1) is one wherein the substrate is a metal component.

Another embodiment of article (A1-1) is one wherein the substrate differs from a metal component. According to this embodiment, preferred substrates are fabrics, end polymeric films free of polymer in accordance with the present invention.

Shaped article (A1-1) can be a membrane, and in particular a porous membrane. In pharmaceutical manufacturing, membranes allow the removal of molecules, particles, viruses, colloids, bacteria, and other types of cellular organisms from solutions. They are used to concentrate and purify a wide variety of biological and chemical process fluids, to concentrate and purify or remove viruses and other colloid suspensions, and to remove very fine particulate contamination for fluid clarification. Microfiltration is the process of removing contaminants in the 0.025 to 10.0 $\mu$m range from fluids by passage through a microporous medium such as a membrane filter. Although micron-sized particles can be removed by use of non-membrane or depth materials such as those found in fibrous media, only a membrane filter, having a precisely defined pore size, can ensure quantitative retention. Ultrafiltration is the process of separating extremely small particles and dissolved molecules from fluids. The primary basis for separation is molecular size although secondary factors such as molecule shape and charge can play a role. Materials ranging in size from 1,000 to 1,000,000 molecular weight are retained by ultrafiltration membranes, while salts and water will pass through. Colloidal and particulate matter can also be retained. Ultrafiltration membranes are used to purify and collect both material passing through the filter and material retained by the filter. Materials smaller than the pore size rating pass through the filter and can be depyrogenated, clarified and separated from high molecular weight contaminants. Materials larger than the pore size rating are retained by the filter and can be concentrated or separated from low molecular weight contaminants. Ultrafiltration membranes are usually operated in a tangential flow mode-feed material sweeps tangentially across the upstream surface of the membrane as filtration occurs-thereby maximizing flux rates and filter life. These systems offer the advantage of long life because ultrafiltration membranes can be repeatedly regenerated with strong cleaning agents, which is one of the reasons why there is a strong need for purification membranes featuring an improved chemical resistance.

The shaped articles (A1-1) of the present invention exhibit improved properties when compared to conventional

hydrocarbon based polysulfones in membrane applications such as ultrafiltration, microfiltration, hemodialysis, and reverse osmosis.

As such, the shaped articles (A1-1) of this invention find also useful applications in gas and vapor separations such as : the generation of purified oxygen or nitrogen from air ; removal of carbon dioxide or hydrogen sulfide from natural gas or exhaust (stack) gases (optionally combined with a carbon dioxide sequestration technology) ; recovery of hydrogen from "synthesis" gases, ammonia purge gases, or hydrocarbon mixtures ; separation of hydrocarbon mixtures, for example alkenes from alkanes ; or separation of alcohols from water using a "pervaporation" process, for example, ethanol from water.

In a second preferred variation of shaped article (A1), shaped article (A1) is chosen from shaped articles having a thickness from 500 μm to 5000 μm [shaped article (A1-2)].

Shaped article (A1-2) has preferably the appearance of a parallelepiped rectangle-like volume the thickness of which is considerably lower than its length and its width ; roughly speaking, it looks then like a "plane with a very low thickness". Then, shaped article (A1-2) is commonly referred to as a sheet.

In a third preferred variation of shaped article (A1), shaped article (A1) is chosen from shaped articles having a thickness above 5000 μm [shaped article (A1-3)].

Shaped article (A1-3) has preferably the appearance of a parallelepiped rectangle-like volume the thickness of which is considerably lower than its length and its width ; roughly speaking, it looks then like a "plane with a low thickness". Then, shaped article (A1-3) is commonly referred to as a slab.

Shaped article (A1-3) is advantageously rigid.

In a fourth preferred variation of shaped article (A1), shaped article (A1) is a hollow body [shaped article (A1-4)].

The thickness of the walls of shaped article (A1-4) is advantageously equal to the thickness t of shaped article (A1-4).

Shaped article (A1-4) has a thickness t of preferably at least 250 μm, more preferably at least 500 μm. Shaped article (A1-4) has a thickness t of preferably at most 5000 μm, more preferably at most 2500 μm.

A second preferred shaped article in accordance with the present invention is essentially one-dimensional [shaped article (A2)]. Shaped article (A2) has a thickness t which is preferably lower than 10 mm, more preferably less than 250 μm, still more preferably less than 50 μm, and the most preferably less than 10 μm.

The thickness t of shaped article (A2) complies preferably with the relationship :

$$t < (V/k')^{1/3} \text{ [which is equivalent to } V > (k'.t) . t . t \text{ ] (rel-3)}$$

wherein k' is equal to 10, V as above defined, t is expressed in mm and V is expressed in $mm^3$.

The thickness t of shaped article (A2) complies very preferably with above relationship (rel-3), except k' is now equal to 100. The thickness t of shaped article (A2) complies still more preferably with above relationship (rel-3), except k' is now equal to 1000.

The thickness t of shaped article (A2) complies the most preferably with above relationship (rel-3), except k' is now equal to 10000.

In addition, the thickness of shaped article (A2) complies preferably with the relationship :

$$t < (S/k')^{1/2} / 2 \text{ [which is equivalent to } S > 4 . (k'.t) . t \text{ ] (rel-4)}$$

S as above defined, k' is equal to 10, t is expressed in mm and S is expressed in $mm^2$.

The thickness t of shaped article (A2) complies very preferably with above relationship (rel-4), except k' is now equal to 100. The thickness t of shaped article (A2) complies still more preferably with above relationship (rel-4), except k' is now equal to 1000. The thickness t of shaped article (A2) complies the most preferably with above relationship (rel-4), except k' is now equal to 10000.

In a first preferred variation of shaped article (A2), shaped article (A2) has the appearance of a cylinder-like plain volume the diameter of which is considerably lower than its length ; roughly speaking, it looks then like a "straight line with an extremely low diameter" [shaped article (A2-1)]. Shaped article (A2-1) is commonly referred to as a filament.

For certain variations of shaped article (A2), in particular when shaped article (A2) is a filament, good results can be obtained notably when shaped article (A2) consists essentially of, or even consists of, the polymer or the polymer composition in accordance with the present invention, as above described.

In a second preferred variation of shaped article (A2), shaped article (A2) is a coating coated on an essentially one-dimensional substrate, like an inorganic fiber, a polymeric fiber free of the polymer or the polymer composition in accordance with the present invention, as above described, or a metal [shaped article (A2-2)]. Shaped article (A2-2)

has then preferably the appearance of a circular crown surrounding a cylinder-like plain volume composed by the essentially one-dimensional substrate, the thickness of the crown being considerably lower than the length and the diameter of the cylinder-like plain volume.

The thickness t of shaped article (A2-2) is still more preferably less than 50 μm, and the most preferably less than 10 μm.

The shaped article according to the present invention may comprise various parts, each of them consisting essentially of the polymer in accordance with the present invention or the polymer composition in accordance with the present invention, as above described.

Membranes according to the present invention allow an improved trade off between gas permeability and gas pair selectivity.

Still a further embodiment according to the present invention is related to the use of the membrane according to the present invention in ultrafiltration, microfiltration, and reverse osmosis applications.

The membranes according to the present invention can be manufactured using any of the conventionally know membrane preparation methods. As non limiting examples, these membranes may be prepared as flat sheets, hollow fiber modules, or spiral wound elements. They may be applied to a porous support (prepared in a previous step or concurrently), and/or be subjected to post-treatments known in the art designed to improve membrane performance.

EXAMPLES

## First set of experiments

A series of experiments were carried out to synthesize different samples of polymers according to the present invention featuring a PSU/PSU-AF structure, i.e. copolymers of which the recurring units were a mix of recurring units of formula (C)

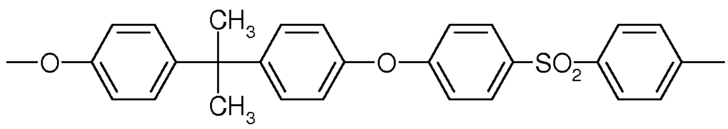

(C)

and of recurring units of formula (D)

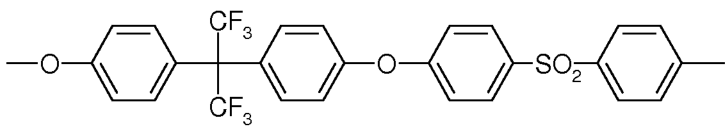

(D)

in various molar ratios.

The examples below were synthesized by a process in accordance with the process described in U.S. Patent No. 6,593,445. Difluorodiphenylsulfone, hexafluorobisphenol A and bisphenol A were used as monomers. 25 mol% excess over stoichiometric requirements of an anhydrous $K_2CO_3$ having an average particle size of 22.16 μm was used. The reaction temperature and reaction time are indicated in Table 1. The reduced viscosities (as measured on 0.2g of polymer in 100 ml NMP at 25°C) and the glass transition temperature of the resulting copolymers are shown in the table below.

**Table 1: Synthesis, relative viscosity (RV) and Tg of the PSU/PSU-AF exemplified samples**

| Sample | PSU/PSU-AF | Reaction temperature (°C) | Reaction time (min) | RV (dl/g) | Tg (°C) |
|---|---|---|---|---|---|
| 1 | 80/20 | 158-159 | 43 | 0.54 | - |
| 2 | 80/20 | 155-160 | 55 | 1.23 | 197.2 |
| 3 | 80/20 | 155-160 | 52 | 1.13 | 196.6 |
| 4 | 60/40 | 155-160 | 47 | 1.24 | 198.8 |
| 5 | 60/40 | 155-160 | 45 | 1.33 | 198.3 |

A PSU homopolymer of which the recurring units were of formula (C) and a PSU-AF homopolymer of which the recurring units were of formula (D) were also prepared in similar conditions, in accordance with the process described in U.S. Patent No. 6,593,445 (respectively samples 6 and 7).

OSU Flammability test

The heat calorimetry testing methodology used here were developed at Ohio State University and are known as the OSU Flammability Test. The OSU tests measure the two minute total heat release (THR) and peak heat release (HRR) in , respectively, kilowatt minutes per square meter of surface area, i.e., $kW.min/m^2$, and kilowatt per square meter of surface area, i.e., $kW/m^2$, for the first five minutes of a burn test under the conditions of the OSU testing. Heat release testing was conducted in accordance with FAR 25.853(d),

Amendment 25-83, according to Appendix F, Part IV, incorporated herein by reference. The average value of peak heat release rate for the heat release rate testing according to FAR 25.853(d), Amendment 25-83, Appendix F, Part IV, as described in DOT/FAA/AR-00/12, as presented in the "Aircraft Materials Fire Test Handbook," dated April 2000, incorporated herein by reference, was used to generate the data of Table 2. Test specimen (6" x 6" x 0.08" molded plaque clamped in fixture) were preconditioned for 24 hrs at 70 $\pm$ 5°C and 50 $\pm$ 5 % relative humidity. The radiant flux density was about 3.5 Watts / $cm^2$. The test were conducted for 5 minutes. HRR results ($kW/m^2$) are reported below.

Batch color test

Batch color was obtained by measuring the color factor. The color data for the samples below were measured on liquid samples taken from reaction solutions (8 % polymer solution using a BYK Gardner Spectrophotometer using D65 light source, 10° observer, MCB calibration standard, in a clear Starner Colorimeter Cell Model 93-G-10 with a 10 mm path length).

The color measurements results are also tabulated in Table 2 below.

**Table 2 : PSU/PSU-AF Flammability and Batch Color Data**

| | Polymer | Copolymer Composition (mole %) | Fluorine Content (wt %) | OSU Data Peak Heat Release ($kW/m^2$) | OSU Data Two Minute Total Heat Release ($kW\text{-}min/m^2$) | Batch color |
|---|---|---|---|---|---|---|
| Sample 6 | PSU homopolymer | 100 / 0 | 0 | 115.0 | 63.4 | 20 |
| Samples 2 and 3 | PSU / PSU-AF | 80 / 20 | 4.91 | 104.1 | 49.8 | 22 |
| Samples 4 and 5 | PSU / PSU-AF | 60 / 40 | 9.39 | 65.4 | 27.1 | 24 |
| Sample 7 | PSU-AF homopolymer | 0 / 100 | 20.71 | 28.6 | 14.6 | 22 |

The exemplified copolymers proved to exhibit an excellent set of properties, including a high flame retardancy and a low colour. In contrast, the PSU homopolymer suffered from a poor flame retardancy. The PSU-AF homopolymer proved to be less cost-attractive than the synthesized copolymers.

**Second set of experiments**

Another series of experiments is carried out to synthesize different samples of copolymers according to the present invention (samples 8, 9 and 10).

Samples 8, 9 and 10 are synthesized by a process in accordance with the process described in U.S. Patent No. 6,593,445, wherein biphenol, bisphenol-AF, and bis(chlorophenylsulfonyl)biphenyl (CPSBP) are used as monomers.

Copolymers the recurring units of which are a mix of recurring units of formula (F)

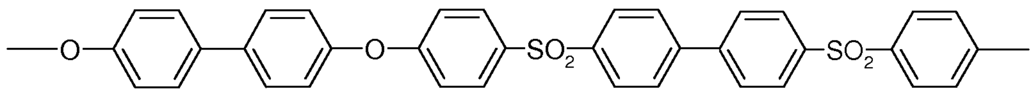

(F)

and recurring units of formula (Q)

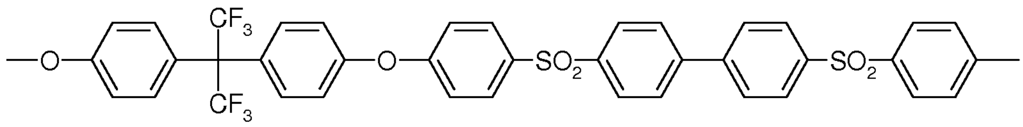

(Q),

(in various molar ratios) are obtained.

A homopolymer of which the recurring units were of formula (F) and a homopolymer of which the recurring units were of formula (Q) have already been prepared in similar conditions, in accordance with the process described in U.S. Patent No. 6,593,445 (respectively, samples 11 and 12).

The OSU flammability and batch color tests, as above detailed, are applied to samples 8, 9 and 10. The same tests have already been applied to samples 11 and 12. The results are presented in Table 3.

**Table 3 : Flammability and Batch Color Data for homo- and copolymers made from biphenol and/or bisphenol-AF on one hand, and CPSFB on the other hand**

| | Polymer | Copolymer Composition (mole%) | Fluorine Content (wt%) | OSU Data Peak Heat Release ($kW/m^2$) | OSU Data Two Minute Total Heat Release ($kW\text{-}min/m^2$) | Batch color |
|---|---|---|---|---|---|---|
| Sample 11 | Biphenol + CPSBP homopolymer | 100 / 0 | 0 | 55.0 | 13.0 | 33 |
| Sample 8 | (Biphenol+CPSBP) + (Bisphenol-AF + CPSBP) copolymer | 75 / 25 | 4.36 | 46.2 | 10.5 | 37 |
| Sample 9 | (Biphenol+CPSBP) + (Bisphenol-AF + CPSBP) copolymer | 50 / 50 | 8.24 | 41.1 | 8.2 | 42 |
| Sample 10 | (Biphenol+CPSBP) + (Bisphenol-AF + CPSBP) copolymer | 25 / 75 | 11.72 | 36.6 | 6.2 | 46 |
| Sample 12 | Bisphenol-AF + CPSBP homopolymer | 0 / 100 | 14.87 | 34.8 | 4.3 | 50 |

Again, the exemplified copolymers exhibit an excellent set of properties, including a high flame retardancy and a low colour. In contrast, the biphenol+CPSBP homopolymer has shown a poor flame retardancy. The bisphenol-AF + CPSBP homopolymer has proved to be less cost-attractive than the exemplified copolymers.

**Third set of experiments**

Still another series of experiments is carried out to synthesize additional samples of copolymers according to the present invention (samples 13 and 14).

Samples 13 and 14 are synthesized by a process in accordance with the process described in U.S. Patent No. 6,593,445, wherein difluorodiphenylsulfone (DFDPS), decafluorobiphenyl (DFB) and, respectively, biphenol or bisphenol-AF are used as monomers.

More precisely, sample 13 is a copolymer the recurring units of which are a mix of recurring units of formula (G)

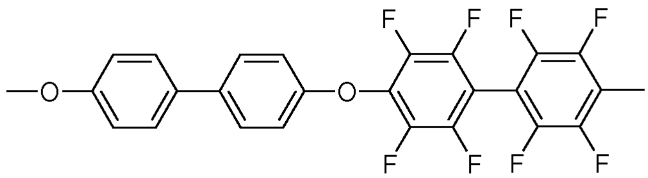

(G)

and recurring units of formula (A)

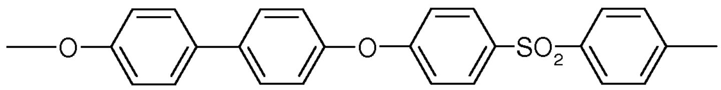

(A)

in a (G):(A) molar ratio of 50:50.

Sample 14 is a copolymer the recurring units of which are a mix of recurring units of formula (G)

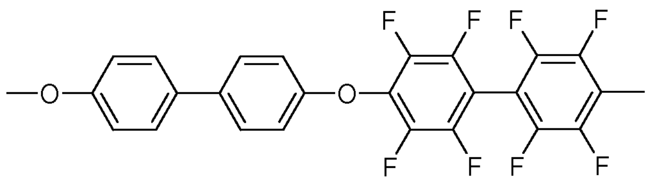

(G)

and recurring units of formula (D)

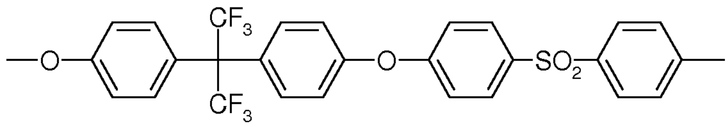

(D)

in a (G):(D) molar ratio also of 50:50.

A homopolymer of which the recurring units were of formula (A) [known as polyphenylsulfone (PPSU)] and a homopolymer of which the recurring units were of formula (D) [known as bisphenol-AF polysulfone (PSU-AF)] have already been prepared in similar conditions, in accordance with the process described in U.S. Patent No. 6,593,445 (respectively samples 15 and 7 - same sample as previously referenced - ).

The OSU flammability and batch color tests, as above detailed, are applied to samples 13 and 14. The same tests have already been applied to samples 15 and 7. The results are presented in Table 4.

**Table 4 : Flammability and Batch Color Data for homo- and copolymers made from DFDPS and/or DFB on one hand, and biphenol and/or bisphenol-AF on the other hand**

| | Polymer | Copolymer Composition (mole%) | Fluorine Content (wt%) | OSU Data Peak Heat Release ($kW/m^2$) | OSU Data Two Minute Total Heat Release ($kW-min/m^2$) | Batch color |
|---|---|---|---|---|---|---|
| Sample 15 | PPSU homopolymer | 100 / 0 | 0 | 62.1 | 16.3 | 25 |
| Sample 13 | PPSU + (biphenol + DFB) copolymer | 50 / 50 | 17.26 | 29.5 | 14.0 | 35 |
| Sample 14 | PSU-AF + (biphenol + DFB) copolymer | 50 / 50 | 25.8 | 20.0 | 12.0 | 30 |

(continued)

| | Polymer | Copolymer Composition (mole%) | Fluorine Content (wt%) | OSU Data Peak Heat Release (kW/m$^2$) | OSU Data Two Minute Total Heat Release (kW-min/m$^2$) | Batch color |
|---|---|---|---|---|---|---|
| Sample 7 | PSU-AF homopolymer | 0/100 | 20.71 | 28.6 | 14.6 | 22 |

Again, the exemplified copolymers exhibit an excellent set of properties, including a high flame retardancy and a low colour. In contrast, the PPSU homopolymer has shown a poor flame retardancy. The PSU-AF homopolymer has proved to be less cost-attractive than the exemplified copolymers.

As shown above by the examples and as explained in the detailed description of the invention, the copolymers of the present invention provide significant advantages over conventional non-fluorinated polysulfone homopolymers, and over fluorinated polysulfone homopolymers. They exhibit a high flame retardancy and excellent optical properties (low colour and high transparency). They are also more cost-attractive than fluorinated polysulfone homopolymers.

The copolymers of the invention may be advantageously used in aircraft applications such as, for example, passenger service units, staircases, window reveals, ceiling panels, information displays, window covers, ceiling panels, sidewall panels, wall partitions, display cases, mirrors, sun visors, window shades, storage bins, storage doors, ceiling overhead storage lockers, serving trays, seat backs, cabin partitions, and ducts. They also provide substantial advantages in transparent articles such as windows, lighting fixtures and partitions are especially well suited for polysulfones and compositions containing polysulfones.

## Claims

1. A polymer featuring a weight average molecular weight of from 25 000 to 85 000, as measured by gel permeation chromatography (GPC) using polystyrene calibrations standards, comprising recurring units $R_A$ and recurring units $R_B$ ;
wherein the recurring units $R_A$ differ from the recurring units $R_B$ ;
wherein the recurring units $R_A$ and/or the recurring units $R_B$ comprise at least one perfluorinated moiety chosen from :

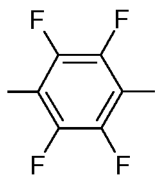

and

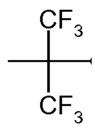

moieties ;
wherein the recurring units $R_A$ and/or the recurring units $R_B$ comprise at least one $-SO_2-$ moiety;
and wherein the polymer is essentially free of acid groups and ketone groups ;
wherein recurring units $R_A$ are of at least one formula selected from the group consisting of :

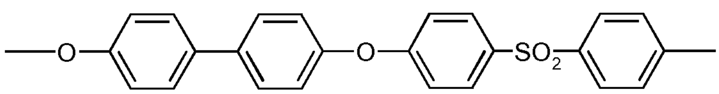

(A)

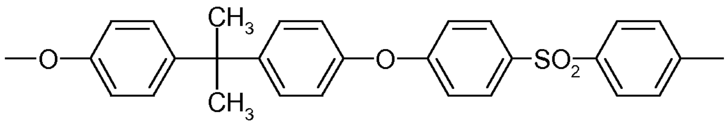

(C)

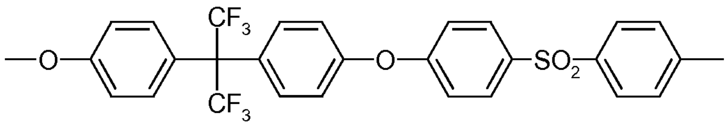

(D)

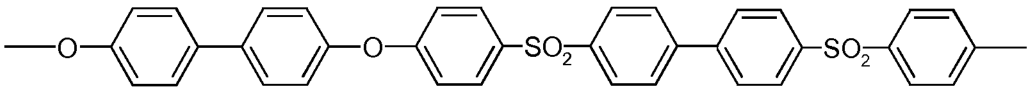

(F), wherein recurring units $R_B$ are of at least one formula selected from the group consisting of :

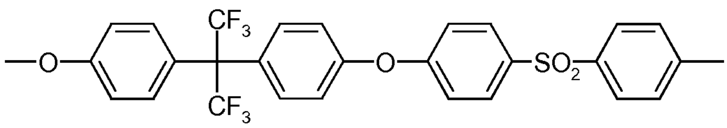

(D)

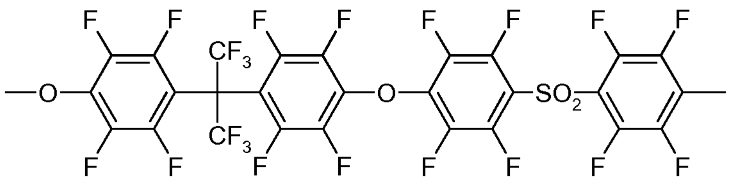

(E)

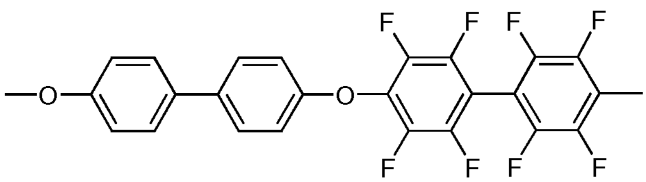

(G)

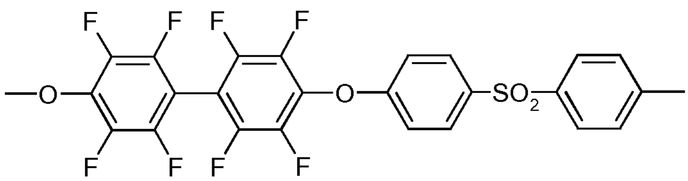

(H)

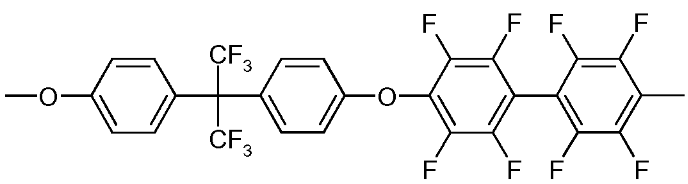

(I)

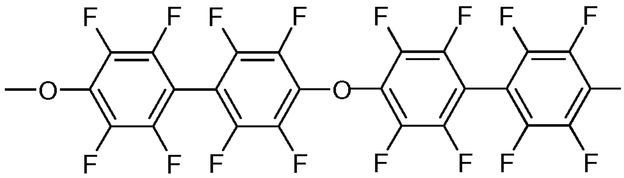

(J)

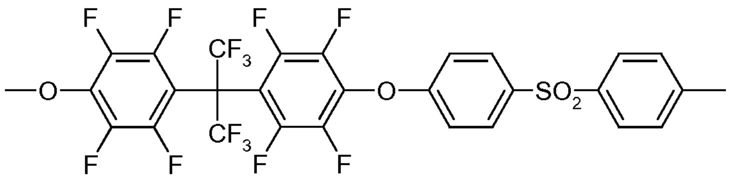

(K)

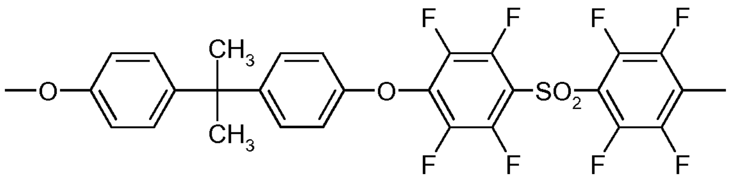

(L)

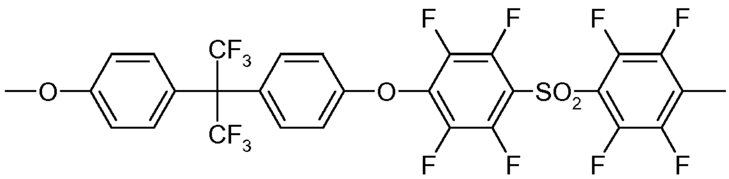

(M)

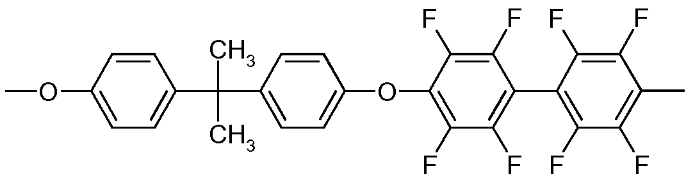

(N)

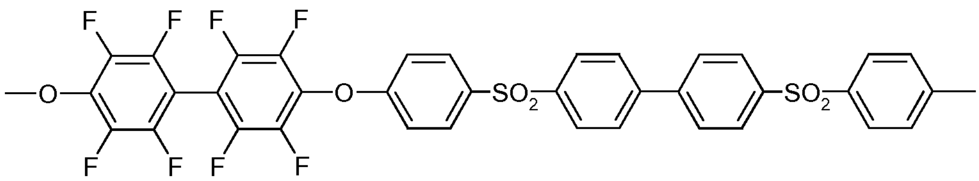

(O)

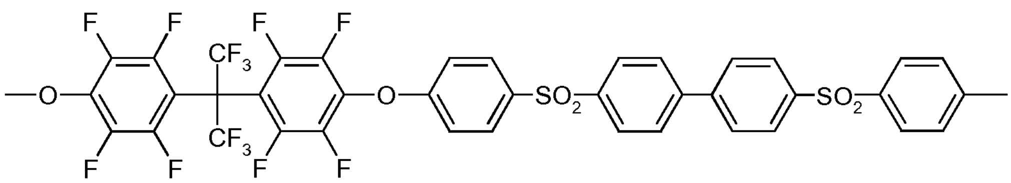

(P)

and

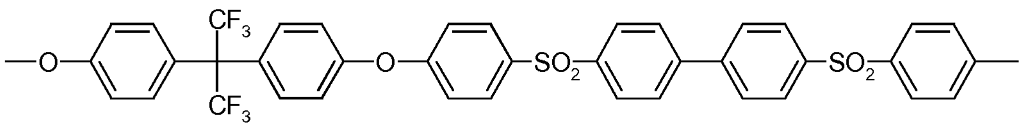

(Q)

wherein said polymer is selected from the group consisting of:

- polymers ($E_A$) wherein recurring units $R_A$ are of the general formula (A) and recurring units $R_B$ are of at least one formula selected from the group consisting of the formulae (G), (H), (I), (J) and (K);
- polymers ($E_C$), wherein recurring units $R_A$ are of the general formula (C) and wherein recurring units $R_B$ are of at least one formula selected from the group consisting of the formulae (D), (G), (H), (I), (J), (K), (L), (M) and (N);
- polymers ($E_D$), wherein recurring units $R_A$ are of the general formula (D) and wherein recurring units $R_B$ are of at least one formula selected from the group consisting of the formulae (H), (I), (J), (K), (L) and (M); and
- polymers ($E_F$), wherein recurring units $R_A$ are of the general formula (F) and wherein recurring units $R_B$ are of at least one formula selected from the group consisting of the formulae (D), (E), (G), (H), (I), (J), (K), (L), (M), (N), (O), (P) and (Q).

**2.** The polymer of Claim 1, having a light transmittance greater than 80 % according to ASTM D-1003.

**3.** The polymer according to anyone of the preceding claims, the recurring units of which are randomly distributed.

**4.** The polymer according to anyone of the preceding claims, having a color factor of reactor solutions diluted to 8 wt % polymer with N-methylpyrrolidinone of less than 50.

**5.** The polymer according to anyone of the preceding claims, having a peak heat release (HRR) of less than 40 $kW/m^2$ under the conditions of the Ohio State University flammability test.

**6.** A method of preparing the polymer according to anyone of the preceding claims, said method comprising reacting an alkaline earth or alkali metal salt of at least one compound having two hydroxyl groups with at least one dihalogenated compound.

**7.** A polymer composition comprising the polymer according to anyone of claims 1 to 5 or manufactured by the method according to claim 6.

**8.** The polymer composition according to claim 7, which further comprises at least one ingredient chosen from dyes and pigments.

**9.** The polymer composition according to claim 7 or 8, which further comprises at least one two-phase siloxane-polyarylene polyether block copolymer comprising (a) at least one siloxane chain having at least two siloxane units represented by the formula :

$$R_bSiO_{\frac{4-b}{2}}$$

wherein R is (i) a monovalent hydrocarbon group, (ii) a divalent organic group, or (iii) ether oxygen (-O-), and *b* has a value from 1 to 3 inclusive, said siloxane chain containing at least one of said siloxane units wherein at least one R is a divalent organic group or ether oxygen (-O-) which links the siloxane chain to a polyarylene polyether chain by a carbon to silicon bond when R is a divalent group or by an aryloxy to silicon bond when R is ether oxygen, and (b) at least one linear thermoplastic polyarylene polyether chain composed of recurring units having the formula :

-O-E-O-E'-

wherein E is the residuum of a dihydric phenol and E' is the residuum of a benzenoid compound having an inert electron withdrawing group ortho or para to the valence bonds, both of said residua being valently bonded to the

ether oxygens through aromatic carbon atoms, said siloxane chain and said polyarylene polyether chain each having a molecular weight such that the copolymer is a two phase polymeric material.

**10.** An article comprising the polymer according to anyone of claims 1 to 5 or the polymer manufactured by the method according to claim 6 or the polymer composition according to any one of claims 7 to 9.

**11.** The article according to claim 10, which is made by injection molding.

**12.** The article according to claim 10 or 11, which is selected from the group consisting of aircraft windows, lighting fixtures, passenger service units, staircases, window reveals, ceiling panels, information displays, window covers, ceiling panels, sidewall panels, wall partitions, display cases, mirrors, sun visors, window shades, storage bins, storage doors, ceiling overhead storage lockers, serving trays, seat backs, cabin partitions and ducts.

**13.** The article according to claim 10 or 11, which is selected from the group consisting of optical waveguides, thin-film capacitors, integrated circuit devices, flame retardant paints, non-stick coatings and flame retardant fibers.

**14.** The article according to claim 10, which is selected from the group consisting of a film, a membrane, a sheet or a slab.

**15.** Use of the membrane according to claim 14 in applications selected from the group consisting of ultrafiltration, microfiltration, and reverse osmosis applications.

**16.** The article of claim 10 which is an essentially one-dimensional shaped article, and which is a filament consisting essentially of the polymer according to anyone of claims 1 to 5 or the polymer composition according to any one of claims 7 to 9.

## Patentansprüche

**1.** Polymer, das ein durchschnittliches Molekulargewicht (Gewichtsmittel) von 25000 bis 85000 aufweist, gemessen mittels Gelpermeationschromatographie (GPC) unter Verwendung von Polystyrol-Kalibrierstandards, das sich wiederholende Einheiten $R_A$ und sich wiederholende Einheiten $R_B$ umfasst;
wobei sich die sich wiederholenden Einheiten $R_A$ von den sich wiederholenden Einheiten $R_B$ unterscheiden;
wobei die sich wiederholenden Einheiten $R_A$ und/oder die sich wiederholenden Einheiten $R_B$ mindestens einen perfluorierten Anteil umfassen, der ausgewählt ist aus :

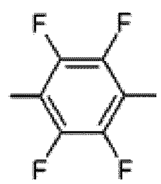

und

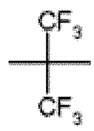

Anteilen; wobei die sich wiederholenden Einheiten $R_A$ und/oder die sich wiederholenden Einheiten $R_B$ mindestens einen $-SO_2-$ Anteil umfassen;
und wobei das Polymer im Wesentlichen frei von Säuregruppen und Ketongruppen ist;
wobei sich wiederholende Einheiten $R_A$ mindestens eine Formel ausgewählt aus der Gruppe aufweisen, bestehend aus :

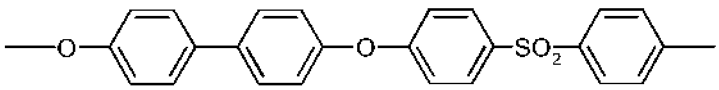

(A)

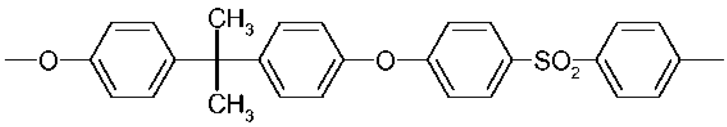

(C)

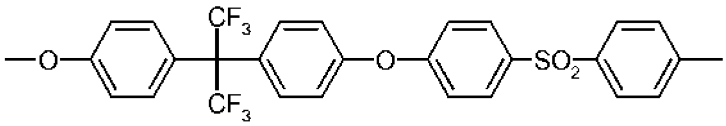

(D)

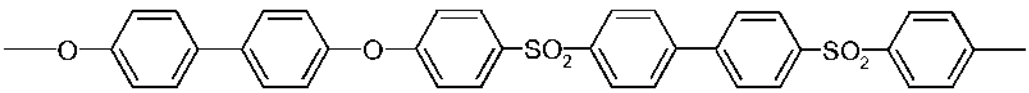

(F),

wobei sich wiederholende Einheiten $R_B$ mindestens eine Formel ausgewählt aus der Gruppe aufweisen, bestehend aus :

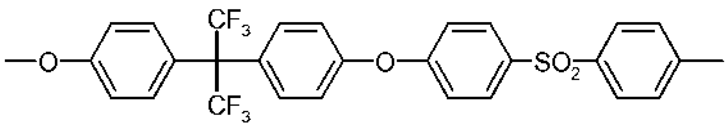

(D)

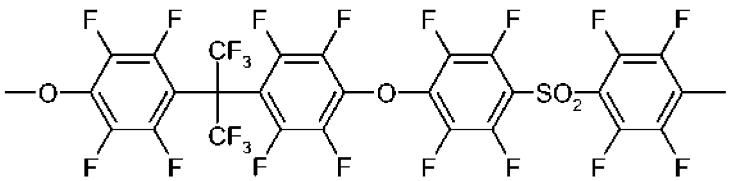

(E)

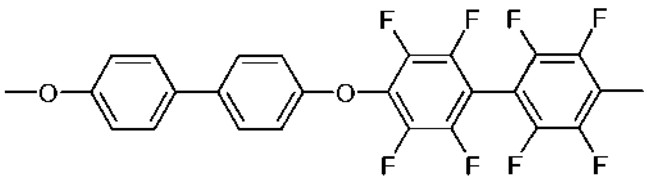

(G)

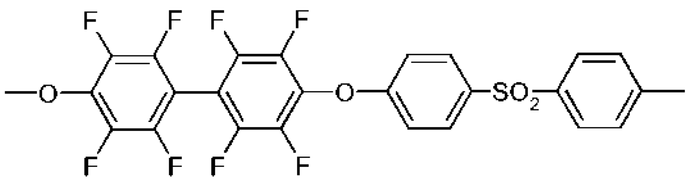

(H)

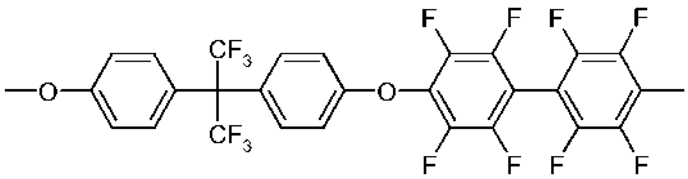

(I)

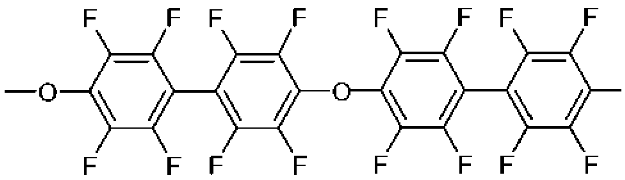

(J)

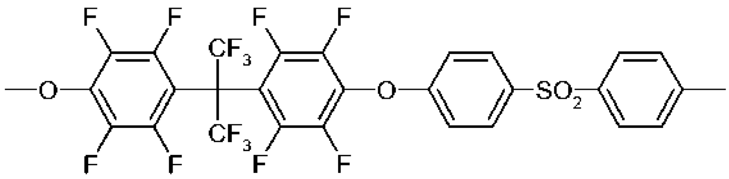

(K)

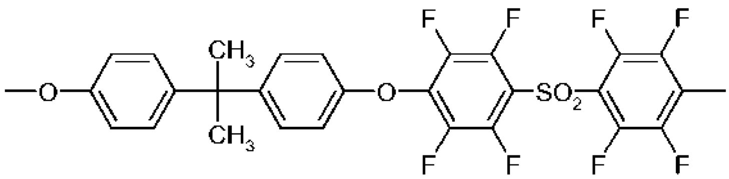

(L)

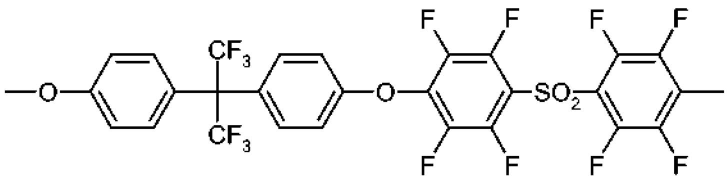

(M)

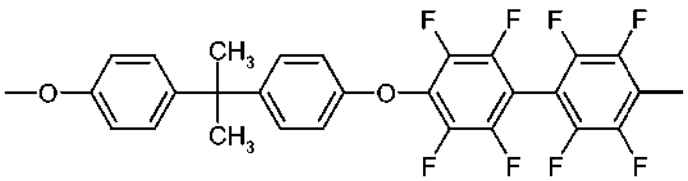

(N)

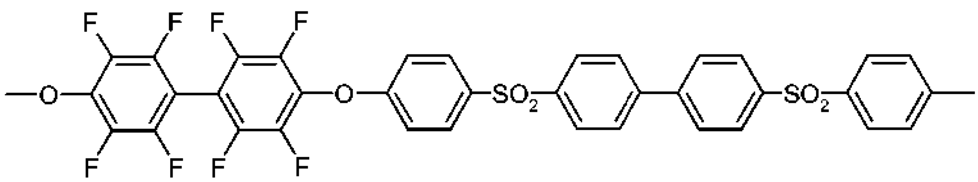

(O)

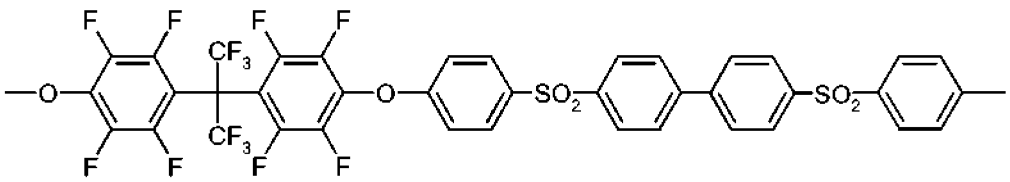

(P)

und

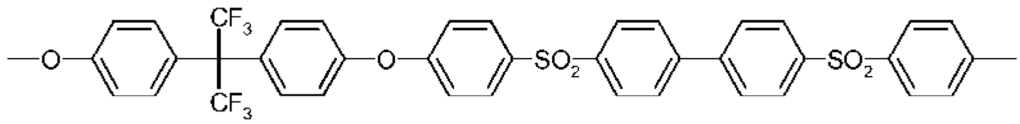

(Q)

wobei das Polymer ausgewählt ist aus der Gruppe bestehend aus :

- Polymeren ($E_A$), wobei die sich wiederholenden Einheiten $R_A$ die allgemeine Formel (A) aufweisen, und sich wiederholende Einheiten $R_B$ mindestens eine Formel ausgewählt aus der Gruppe bestehend aus den Formeln (G), (H), (I), (J) und (K) aufweisen;
- Polymeren ($E_C$), wobei die sich wiederholenden Einheiten $R_A$ die allgemeine Formel (C) aufweisen, und wobei sich wiederholende Einheiten $R_B$ mindestens eine Formel ausgewählt aus der Gruppe bestehend aus den Formeln (D), (G), (H), (I), (J), (K), (L), (M) und (N) aufweisen;
- Polymeren ($E_D$), wobei die sich wiederholenden Einheiten $R_A$ die allgemeine Formel (D) aufweisen, und wobei sich wiederholende Einheiten $R_B$ mindestens eine Formel ausgewählt aus der Gruppe bestehend aus den Formeln (H), (I), (J), (K), (L) und (M) aufweisen; und
- Polymeren ($E_F$), wobei die sich wiederholenden Einheiten $R_A$ die allgemeine Formel (F) aufweisen, und wobei sich wiederholende Einheiten $R_B$ mindestens eine Formel ausgewählt aus der Gruppe bestehend aus den Formeln (D), (E), (G), (H), (I), (J), (K), (L), (M), (N), (O), (P) und (Q) aufweisen.

**2.** Polymer nach Anspruch 1 mit einer Lichtdurchlässigkeit größer als 80 % gemäß ASTM D-1003.

**3.** Polymer nach einem der vorhergehenden Ansprüche, dessen sich wiederholende Einheiten statistisch verteilt sind.

**4.** Polymer nach einem der vorhergehenden Ansprüche mit einem Farbfaktor von Reaktorlösungen, die mit N-Methylpyrrolidinon auf 8 Gew.% Polymer verdünnt sind, von weniger als 50.

**5.** Polymer nach einem der vorhergehenden Ansprüche mit einer Spitzenwärmefreisetzung (HRR) von weniger als 40 $kW/m^2$ unter den Bedingungen der Entflammbarkeitsprüfung der Ohio State University.

**6.** Verfahren zur Herstellung des Polymers gemäß einem der vorhergehenden Ansprüche, wobei das Verfahren Umsetzen eines Erdalkali- oder Alkalimetallsalzes von mindestens einer Verbindung mit zwei Hydroxylgruppen mit mindestens einer dihalogenierten Verbindung umfasst.

**7.** Polymerzusammensetzung, umfassend das Polymer gemäß einem der Ansprüche 1 bis 5 oder hergestellt nach dem Verfahren gemäß Anspruch 6.

**8.** Polymerzusammensetzung nach Anspruch 7, die ferner mindestens einen Bestandteil ausgewählt aus Farbstoffen und Pigmenten umfasst.

**9.** Polymerzusammensetzung nach Anspruch 7 oder 8, die ferner mindestens ein zweiphasiges Siloxan-Polyarylenpolyether-Blockcopolymer umfasst, umfassend (a) mindestens eine Siloxankette mit mindestens zwei Siloxaneinheiten, die durch die folgende Formel wiedergegeben werden :

$$R_bSiO_{\frac{4-b}{2}}$$

wobei R (i) eine einwertige Kohlenwasserstoffgruppe, (ii) eine zweiwertige organische Gruppe oder (iii) Ethersauerstoff (-O-) ist, und *b* einen Wert von 1 bis 3 einschließlich aufweist, wobei die Siloxankette mindestens eine der Siloxaneinheiten enthält, wobei mindestens ein R eine zweiwertige organische Gruppe oder Ethersauerstoff (-O-) ist, um die Siloxankette mittels einer Kohlenstoff-Silicium-Bindung mit einer Polyarylenpolyetherkette zu verknüpfen, wenn R eine zweiwertige Gruppe ist, oder mittels einer Aryloxy-Silicium-Bindung zu verknüpfen, wenn R Ethersauerstoff ist, und (b) mindestens eine lineare thermoplastische Polyarylenpolyetherkette, die aus sich wiederholenden Einheiten mit der folgenden Formel zusammengesetzt ist:

-O-E-O-E'-

wobei E der Rest eines zweiwertigen Phenols ist, und E' der Rest einer benzolartigen Verbindung mit einer inerten elektronenziehenden Gruppe ortho oder para zu den Valenzbindungen ist, wobei beide der Reste über aromatische Kohlenstoffatome an die Ethersauerstoffatome valenzgebunden sind, wobei die Siloxankette und die Polyarylenpolyetherkette jeweils ein solches Molekulargewicht aufweisen, dass das Copolymer ein zweiphasiges polymeres Material ist.

**10.** Gegenstand, umfassend das Polymer gemäß einem der Ansprüche 1 bis 5 oder das Polymer, gefertigt nach dem Verfahren gemäß Anspruch 6, oder die Polymerzusammensetzung gemäß einem der Ansprüche 7 bis 9.

**11.** Gegenstand nach Anspruch 10, der durch Spritzguss hergestellt ist.

**12.** Gegenstand nach Anspruch 10 oder 11, der ausgewählt ist aus der Gruppe bestehend aus Flugzeugfenstern, Beleuchtungskörpern, Passagierserviceeinheiten (PSU), Treppen, Fensterlaibungen, Deckenplatten, Informationsanzeigen, Fensterabdeckungen, Deckenplatten, Seitenwandplatten, Wandtrennern, Vitrinen, Spiegeln, Sonnenblenden, Fensterrollos, Lagerungsbehältern, Stauklappen, Stauräumen im Deckenbereich, Serviertabletts, Sitzlehnen, Kabinentrennwänden und Schächten.

**13.** Gegenstand nach Anspruch 10 oder 11, der ausgewählt ist aus der Gruppe bestehend aus optischen Wellenleitern, Dünnschichtkondensatoren, Geräten mit integrierten Schaltungen, flammhemmenden Farben, Antihaftbeschichtungen und flammenhemmenden Fasern.

**14.** Gegenstand nach Anspruch 10, der ausgewählt ist aus der Gruppe bestehend aus einem Film, einer Membran, einer Folie oder einer Platte.

**15.** Verwendung der Membran nach Anspruch 14 in Anwendungen ausgewählt aus der Gruppe bestehend aus Ultrafiltration, Mikrofiltration und Umkehrosmoseanwendungen.

**16.** Gegenstand nach Anspruch 10, der ein im Wesentlichen eindimensional geformter Gegenstand ist, und der ein Filament ist, das im Wesentlichen aus dem Polymer gemäß einem der Ansprüche 1 bis 5 oder der Polymerzusammensetzung gemäß einem der Ansprüche 7 bis 9 besteht.

## Revendications

**1.** Polymère ayant une masse moléculaire moyenne en poids de 25 000 à 85 000, telle que mesurée par chromatographie par perméation de gel (GPC) en utilisant des étalons en polystyrène, comprenant des unités structurales $R_A$ et des unités structurales $R_B$ ;
dans lequel les unités structurales $R_A$ diffèrent des unités structurales $R_B$ ;
dans lequel les unités structurales $R_A$ et/ou les unités structurales $R_B$ comprennent au moins une fraction perfluorée sélectionnée parmi : des fractions

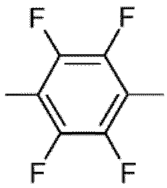 et 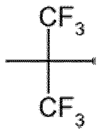 ;

dans lequel les unités structurales $R_A$ et/ou les unités structurales $R_B$ comprennent au moins une fraction $-SO_2-$ ; et le polymère étant sensiblement exempt de groupes acides et de groupes cétone ; dans lequel les unités structurales $R_A$ sont selon au moins une formule sélectionnée dans le groupe constitué de :

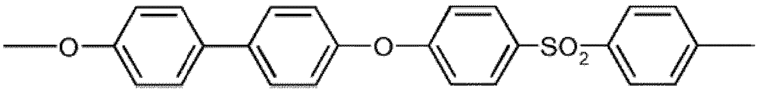

(A)

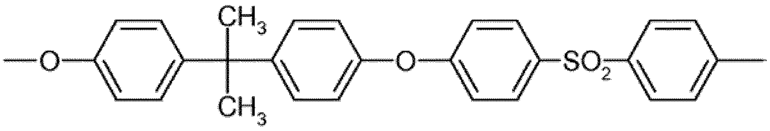

(C)

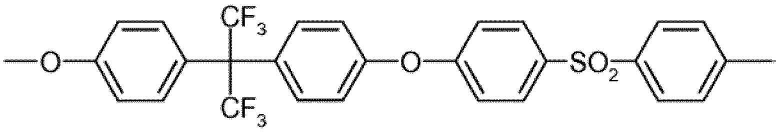

(D)

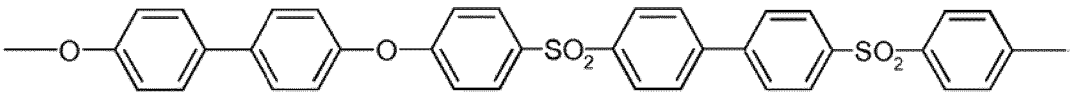

(F),

dans lequel les unités structurales $R_B$ sont selon au moins une formule sélectionnée dans le groupe constitué de :

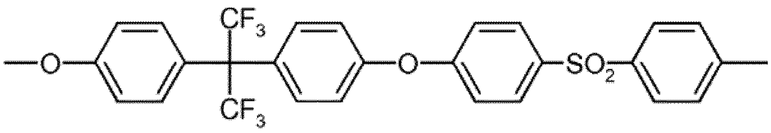

(D)

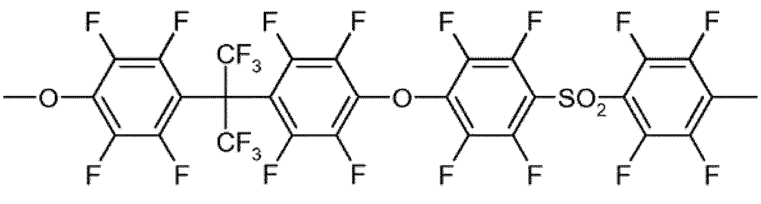

(E)

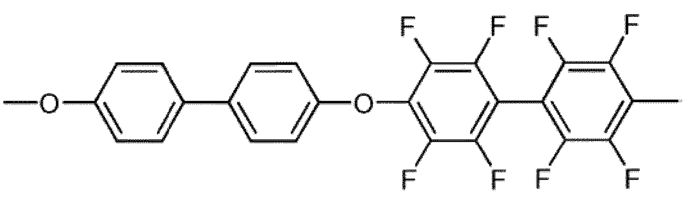

(G)

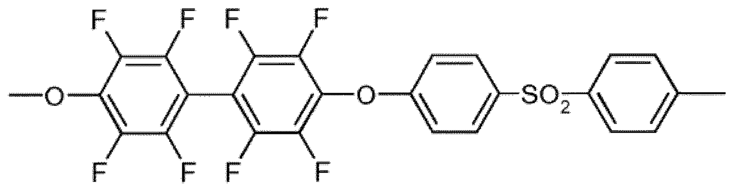

(H)

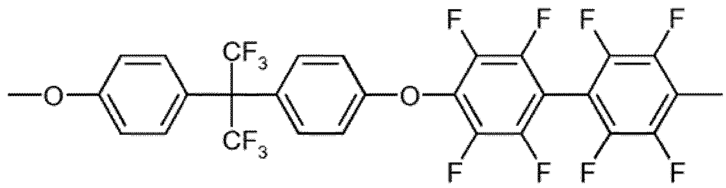

(I)

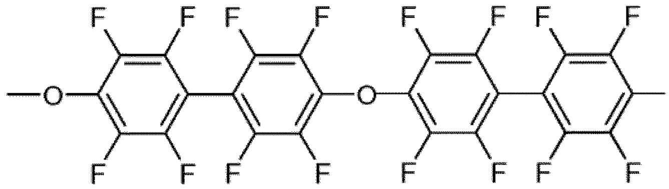

(J)

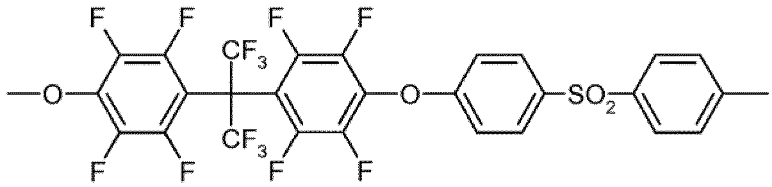

(K)

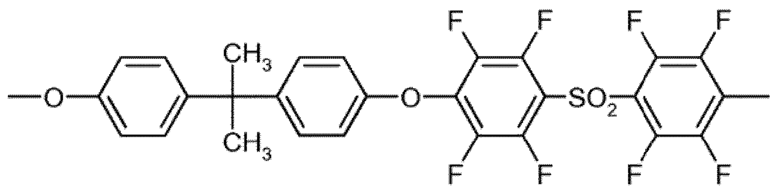

(L)

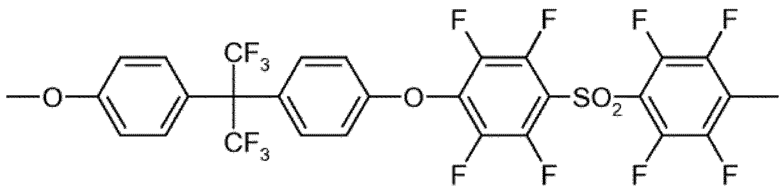

(M)

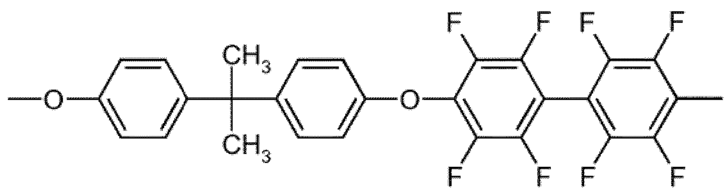

(N)

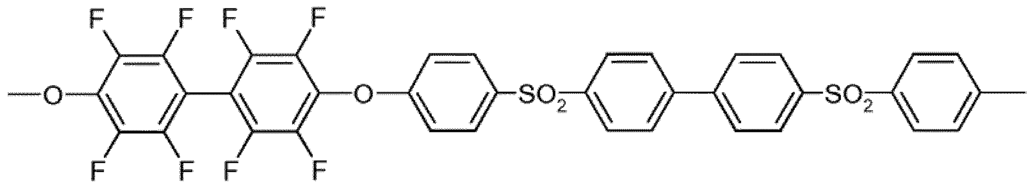

(O)

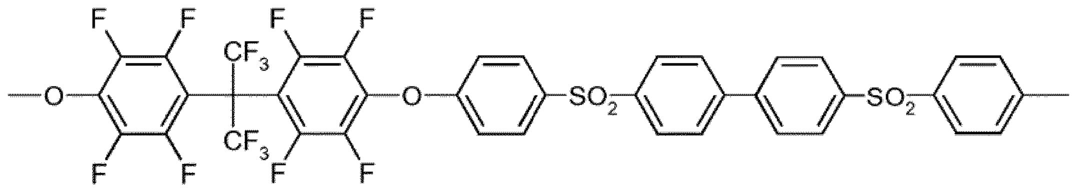

(P)

et

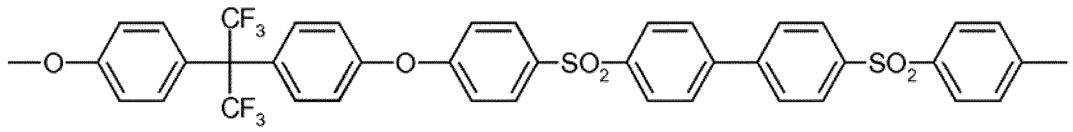

(Q)

ledit polymère étant sélectionné dans le groupe constitué de :

- polymères ($E_A$), dans lesquels les unités structurales $R_A$ sont selon la formule générale (A) et les unités structurales $R_B$ sont selon au moins une formule sélectionnée dans le groupe constitué des formules (G), (H), (I), (J) et (K) ;
- polymères ($E_C$), dans lesquels les unités structurales $R_A$ sont selon la formule générale (C) et dans lesquels les unités structurales $R_B$ sont selon au moins une formule sélectionnée dans le groupe constitué des formules (D), (G), (H), (I), (J), (K), (L), (M) and (N) ;
- polymères ($E_D$), dans lesquels les unités structurales $R_A$ sont selon la formule générale (D) et dans lesquels les unités structurales $R_B$ sont selon au moins une formule sélectionnée dans le groupe constitué des formules (H), (I), (J), (K), (L) et (M) ; et
- polymères ($E_F$), dans lesquels les unités structurales $R_A$ sont selon la formule générale (F) et dans lesquels les unités structurales $R_B$ sont selon au moins une formule sélectionnée dans le groupe constitué des formules (D), (E), (G), (H), (I), (J), (K), (L), (M), (N), (O), (P) et (Q).

**2.** Polymère selon la revendication 1, ayant un facteur de transmission de la lumière supérieur à 80 % selon ASTM D-1003.

**3.** Polymère selon l'une quelconque des revendications précédentes, dont les unités structurales sont distribuées de façon aléatoire.

**4.** Polymère selon l'une quelconque des revendications précédentes, ayant un facteur de coloration de solutions réactives diluées jusqu'à un niveau de 8 % en poids de polymère avec la N-méthylpyrrolidinone qui est inférieur à 50.

**5.** Polymère selon l'une quelconque des revendications précédentes, ayant un dégagement de chaleur maximum inférieur à 40 kW/m$^2$ dans les conditions définies pour l'essai d'inflammabilité de l'Université d'État de l'Ohio.

**6.** Procédé de préparation du polymère selon l'une quelconque des revendications précédentes, ledit procédé comprenant la réaction d'un sel de métal alcalino-terreux ou alcalin d'au moins d'un composé comportant deux groupes hydroxyle avec au moins un composé dihalogéné.

**7.** Composition de polymère comprenant le polymère selon l'une quelconque des revendications 1 à 5 ou fabriqué par le procédé selon la revendication 6.

**8.** Composition de polymère selon la revendication 7, comprenant en outre au moins un ingrédient sélectionné parmi des colorants et des pigments.

**9.** Composition de polymère selon la revendication 7 ou 8, comprenant en outre au moins un copolymère biphasé à blocs de siloxane/polyarylène-polyéther comprenant (a) au moins une chaîne siloxane comportant au moins deux unités siloxane représentée par la formule :

$$R_bSiO_{\frac{4-b}{2}}$$

dans laquelle R est (i) un groupe hydrocarboné monovalent, (ii) un groupe organique divalent, ou (iii) un atome d'oxygène éthéré (-O), et *b* a une valeur de 1 à 3 inclusivement, ladite chaîne siloxane contenant au moins une desdites unités siloxane, dans laquelle au moins un groupe R est un groupe organique divalent ou un atome d'oxygène éthéré (-O) qui lie la chaîne siloxane à une chaîne polyarylène-polyéther par une liaison carbone-silicium quand R est un groupe divalent ou par une liaison aryloxy-silicium quand R est un atome d'oxygène éthéré, et (b) au moins une chaîne polyarylène-polyéther linéaire, thermoplastique, constituée d'unités structurales ayant la formule :

-O-E-O-E'-

dans laquelle E est le résidu d'un phénol dihydrique et E' est le résidu d'un composé benzénoïdique comportant un groupe inerte soustracteur d'électrons en position ortho ou para relativement aux liaisons de valence, ces deux résidus étant liés par des liaisons de valence aux atomes d'oxygène éthéré par des atomes de carbone aromatiques, ladite chaîne siloxane et ladite chaîne polyarylène-polyéther ayant une masse moléculaire telle que le copolymère soit un matériau polymère biphasé.

**10.** Article comprenant le polymère selon l'une quelconque des revendications 1 à 5 ou le polymère fabriqué par le procédé selon la revendication 6 ou la composition de polymère selon l'une quelconque des revendications 7 à 9.

**11.** Article selon la revendication 10, lequel est fabriqué en utilisant un procédé de moulage par injection.

**12.** Article selon la revendication 10 ou 11, lequel est sélectionné dans le groupe constitué de hublots, d'appareils d'éclairage, de blocs services passagers, d'escaliers, de moulures de hublots, de panneaux de plafond, d'affichages d'information, d'obturateurs de hublots, de panneaux de plafond, de panneaux de parois latérales, de cloisons, de vitrines, de miroirs, de pare-soleil, de rideaux de hublots, de bacs de rangement, de portes étagères, de casiers de rangement surélevés montés sur plafond, de plateaux de service, de dossiers de sièges, de séparations de carlingue et de conduits utilisés dans des avions.

**13.** Article selon la revendication 10 ou 11, lequel est sélectionné dans le groupe constitué de guides d'ondes optiques, de condensateurs en couche mince, de dispositifs à circuits intégrés, de peintures ignifuges, de revêtements antiadhésifs et de fibres ignifuges.

**14.** Article selon la revendication 10, lequel est sélectionné dans le groupe constitué d'un film, d'une membrane, d'une feuille ou d'une dalle.

**15.** Utilisation de la membrane selon la revendication 14 dans des applications sélectionnées dans le groupe constitué de l'ultrafiltration, de la microfiltration, et d'applications d'osmose inverse.

**16.** Article selon la revendication 10, lequel est un article de forme sensiblement unidimensionnelle, et lequel est un filament constitué essentiellement du polymère selon l'une quelconque des revendications 1 à 5 ou de la composition de polymère selon l'une quelconque des revendications 7 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5204400 A
- US 5916958 A
- US 6503988 B
- US 6482880 B
- EP 2007062358 W
- US 6593445 B
- GB 1268093 A
- US 3539657 A

### Non-patent literature cited in the description

- Basic Definitions of Terms relating to Polymers. *Pure and Applied Chemistry,* 1974, vol. 40 (3), 477-491